# EUROPEAN PATENT APPLICATION

(11) **EP 3 007 506 A1**
(43) Date of publication of application: **13.04.2016**
(21) Application number: 14806905.7
(22) Date of filing: 17.04.2014
(51) Int. Cl.: H04W 72/12, H04W 24/10, H04W 28/06, H04W 92/20

(54) **WIRELESS BASE STATION, WIRELESS COMMUNICATION SYSTEM, AND WIRELESS COMMUNICATION METHOD**

(30) Priority: 03.06.2013 JP 2013116718
(71) Applicant: NTT DOCOMO, INC., Chiyoda-ku Tokyo 100-6150 (JP)
(72) Inventor: NAGATA, Satoshi, Tokyo 100-6150 (JP); HOU, Xiaolin, Beijing 100190 (CN); NA, Chongning, Beijing 100190 (CN); WANG, Chunyi, Beijing 100190 (CN); HARADA, Atsushi, Beijing 100190 (CN)
(74) Representative: Hoffmann Eitle
(86) International application number: PCT/JP2014/060966
(87) International publication number: WO 2014/196276

(57) **Abstract**

The present invention is designed to reduce the impact of inter-cell interference by interference control using signaling between radio base stations. In the radio communication system of the present invention, a radio base station carries out radio communication with a user terminal by using a UL/DL configuration, which represent the configuration of uplink subframes and downlink subframes in a radio frame. Also, the radio base station determines the interference control information to use in interference control in the fixed subframe and the flexible subframe in the above UL/DL configuration. Also, the radio base station transmits the above interference control information to the neighboring radio base stations via an inter-radio-base-station interface.

## Description

### Technical Field

The present invention relates to a radio base station, a radio communication system and a radio communication method that are applicable to radio communication systems to use time division duplex (TDD).

### Background Art

Conventionally, frequency division duplex (FDD) to divide between the uplink (UL) and the downlink (DL) based on frequency and time division duplex (TDD) to divide between the uplink and the downlink based on time have been known as duplexing formats in radio communication systems (for example, see non-patent literature 1). In FDD, uplink signals and downlink signals are transmitted and received in different frequencies. On the other hand, in TDD, uplink signals and downlink signals are transmitted and received at different times.

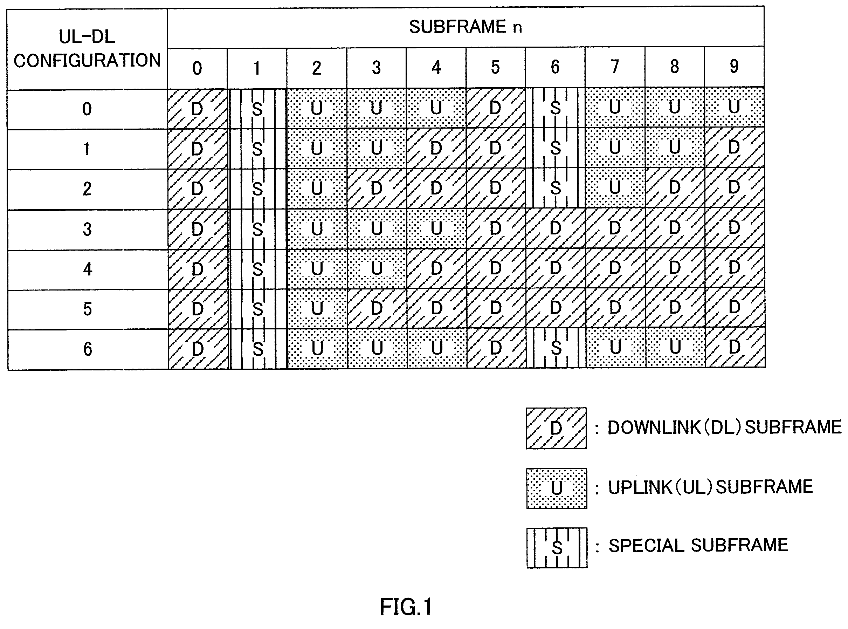

Also, in radio communication systems to use TDD such as LTE (Long Term Evolution), UL/DL configurations (UL/DL configurations or UL-DL configurations) to represent the configurations (ratios) of one or more uplink subframes and one or more downlink subframes in radio frames are defined (see FIG. 1). For example, FIG. 1 shows seven UL/DL configurations 0 to 6, which represent the configurations of uplink subframes and downlink subframes.

### Citation List

### Non-patent Literature

Non-Patent Literature 1: 3GPP, TR25.912 (V7.1.0), "Feasibility Study for Evolved UTRA and UTRAN," Sept. 2006

### Summary of Invention

### Technical Problem

Generally, traffic is asymmetrical between UL and DL. Also, the ratio of traffic between UL and DL in a given period is not constant, but varies over time or between locations. Consequently, in radio communication systems to use TDD, there is a demand to make effective use of radio resources by dynamically changing the UL/DL resource configuration in a given cell (transmission point, radio base station, etc.) depending on the fluctuation of traffic.

So, in future radio communication systems to use TDD such as LTE-advanced (LTE-A), which is a successor of LTE, a study is in progress to change between the UL/DL configurations shown in FIG. 1 in order to achieve traffic adaptation gain (dynamic TDD).

Meanwhile, in dynamic TDD, when different UL/DL configurations are used between neighboring radio base stations, inter-cell interference may be produced in subframes in which the direction of transmission varies between these radio base stations. In order to reduce the impact of this inter-cell interference, there is a demand to execute interference control (interference coordination, eIMTA: enhanced Interference Mitigation and Traffic Adaptation, etc.) which uses signaling between the radio base stations (backhaul signaling).

The present invention has been made in view of the above, and it is therefore an object of the present invention to provide a radio base station, a radio communication system and a radio communication method which can reduce the impact of inter-cell interference by way of interference control using signaling between radio base stations.

### Solution to Problem

The radio communication method of the present invention is a radio communication method in a radio base station that is connected to a neighboring radio base station via an inter-radio-base-station interface, comprising the steps of: carrying out radio communication with a user terminal by using a UL/DL configuration, which represents a configuration of an uplink subframe and a downlink subframe in a radio frame, determining interference control information that is used in interference control for a fixed subframe and a flexible subframe in the UL/DL configuration, and transmitting the interference control information to the neighboring radio base station via the inter-radio-base-station interface.

### Advantageous Effects of Invention

According to the present invention, it is possible to reduce the impact of inter-cell interference by interference control using signaling between radio base stations.

### Brief Description of Drawings

FIG. 1 is a diagram to explain examples of UL/DL configurations;
FIG. 2 provides diagrams to explain inter-cell interference;
FIG. 3 provides diagrams to explain fixed subframes and flexible subframes;
FIG. 4 is a diagram to explain a radio communication system which includes radio base stations that are connected via an inter-base-station interface;
FIG. 5 provides diagrams to show examples of information elements that are signaled via the X2 interface;
FIG. 6 is a diagram to show an example of configuring IOIs and HIIs;
FIG. 7 is a diagram to explain an example of interference control to use IOIs and HIIs;
FIG. 8 provides diagrams to explain examples of determining IOIs and HIIs;
FIG. 9 provides diagrams to explain the interference which a radio base station receives in uplink subframes;
FIG. 10 provides diagrams to explain the interference which a radio base station receives in downlink subframes;
FIG. 11 is a diagram to show an example of fluctuation-level information according to aspect 1.1 of the present invention;
FIG. 12 is a diagram to show an example of a radio communication method according to aspect 1.1 of the present invention;
FIG. 13 is a diagram to show an example of determining fluctuation-level information according to aspect 1.1 of the present invention;
FIG. 14 is a diagram to show examples of subframe-type information according to aspect 1.2 of the present invention;
FIG. 15 is a diagram to show an example of a radio communication method according to aspect 1.2 of the present invention;
FIG. 16 is a diagram to explain dual-IOI report according to aspect 1.2 of the present invention;
FIG. 17 provides diagrams to explain examples of dual-IOI report signaling according to aspect 1.2 of the present invention;
FIG. 18 is a diagram to show examples of interference-type information according to aspect 1.3 of the present invention;
FIG. 19 is a diagram to show an example of a radio communication method according to aspect 1.3 of the present invention;
FIG. 20 is a diagram to explain dual-IOI report according to aspect 1.3 of the present invention;
FIG. 21 provides diagrams to explain examples of dual-IOI report signaling according to aspect 1.3 of the present invention;
FIG. 22 is a diagram to show examples of subframe-type information according to aspect 2 of the present invention;
FIG. 23 is a diagram to explain dual-HII report according to aspect 2 of the present invention;
FIG. 24 provides diagrams to explain examples of dual-HII report signaling according to aspect 2 of the present invention;
FIG. 25 is a diagram to show examples of dynamic assignment information according to aspect 3.1 of the present invention;
FIG. 26 is a diagram to show an example of determining dynamic assignment information according to aspect 3.1.1 of the present invention;
FIG. 27 provides diagrams to show an example of dynamic assignment information according to aspect 3.1.1 of the present invention;
FIG. 28 is a diagram to show an example of dynamic assignment information according to aspect 3.1.2 of the present invention;
FIG. 29 is a diagram to show an example of dynamic TDD configuration information according to aspect 3.2 of the present invention;
FIG. 30 is a diagram to show an example of dynamic TDD configuration information according to aspect 3.2 of the present invention;
FIG. 31 is a diagram to show an example of dynamic TDD support information according to aspect 4 of the present invention;
FIG. 32 is a diagram to show an example of dynamic TDD support information according to aspect 4 of the present invention;
FIG. 33 is a schematic diagram to show an example of a radio communication system according to the present embodiment;
FIG. 34 is a diagram to explain an overall structure of a radio base station according to the present embodiment; and
FIG. 35 is a diagram to explain a functional structure of a radio base station according to the present embodiment.

### Description of Embodiments

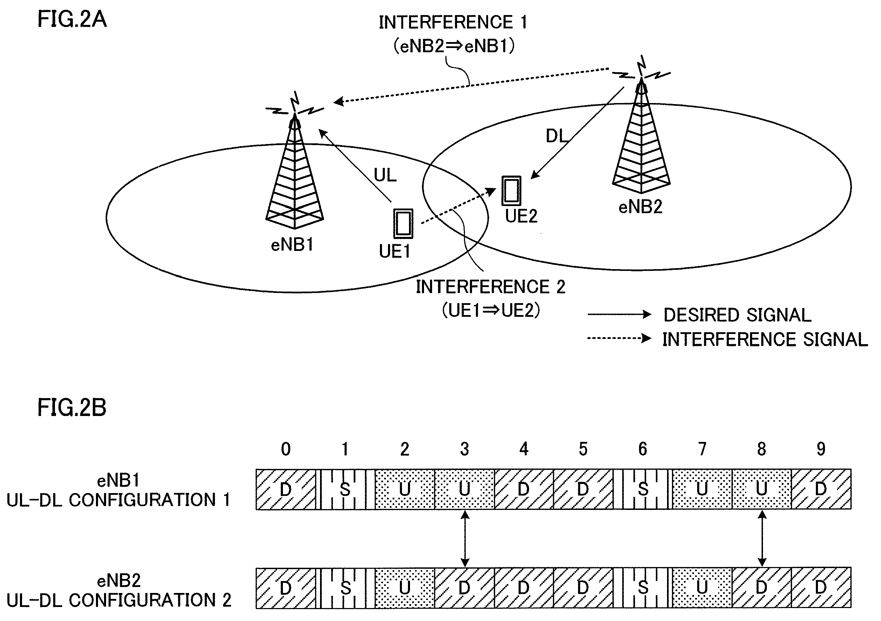

Now, inter-cell interference in dynamic TDD will be described with reference to FIG. 2. Dynamic TDD refers to changing the configuration of uplink subframes and downlink subframes (UL-DL configuration) dynamically in a radio communication system in which time division duplex (TDD) is employed. As shown in FIG. 2A, a radio communication system to employ dynamic TDD is comprised of user terminals (UE: User Equipment) 1 and 2 that communicate with radio base stations (eNBs: eNodeBs) 1 and 2, respectively.

In FIG. 2A, between the radio base station 1 and the user terminal 1 and between the radio base station 2 and the user terminal 2, radio communication is carried out in TDD. FIG. 2B shows, by way of example, a case where the radio base station 1 employs a UL/DL configuration 1 and the radio base station 2 employs a UL/DL configuration 2.

In this case, in subframes 3 and 8, the radio base station 1 carries out UL transmission and the radio base station 2 carries out DL transmission. That is, in the same time regions/the same frequency regions, downlink signals are transmitted from the radio base station 2 to the user terminal 2, and uplink signals are transmitted from the user terminal 1 to the radio base station 1.

Consequently, there is a threat that, as shown in FIG. 2A, a downlink signal that is transmitted from the radio base station 2 to the user terminal 2 becomes interference 1 against an uplink signal that is transmitted from the user terminal 1 to the radio base station 1 (inter-base-station interference (eNB-to-eNB interference) and downlink interference (DL interference) between the radio base station 1 and the radio base station 2). Also, there is a threat that an uplink signal that is transmitted from the user terminal 1 to the radio base station 1 becomes interference 2 against a downlink signal that is transmitted from the radio base station 2 to the user terminal 2 (inter-terminal interference (UE-to-UE interference) and uplink interference (UL interference) between the user terminal 1 and the user terminal 2).

As a result of this, in FIG. 2A, there is a threat that the received quality of the radio base station 1 and the user terminal 2 decreases in the subframes 3 and 8. Also, generally speaking, the transmission power of a downlink signal transmitted from a radio base station is greater than the transmission power of an uplink signal transmitted from a user terminal. Consequently, the interference (inter-base-station interference) which a downlink signal transmitted from a radio base station causes against an uplink signal (for example, an uplink control signal) transmitted from a user terminal has a particularly large impact.

In this way, in dynamic TDD, when different UL/DL configurations are used between neighboring radio base stations, subframes in which the direction of transmission is different between these radio base stations (for example, the subframes 3 and 8 in FIG. 2B) suffer a significant impact of inter-cell interference (in particular, the inter-base-station interference 1 in FIG. 2A). On the other hand, in subframes in which the direction of transmission is the same between these radio base stations (for example, the subframes 0 to 2, 4 to 7 and 9 in FIG. 2B), the impact of inter-cell interference is insignificant.

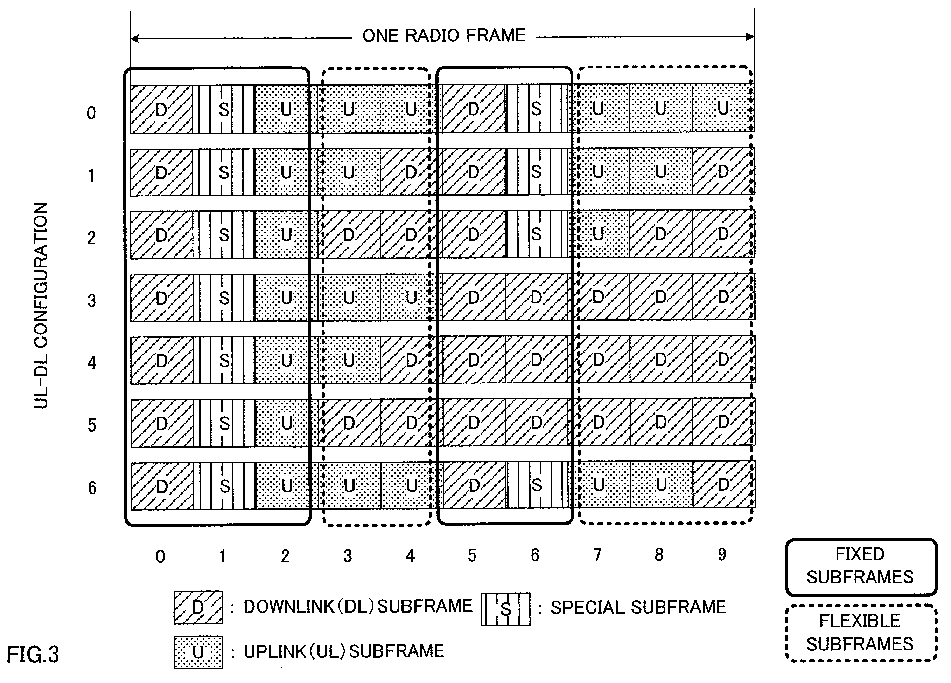

Now, with reference to FIG. 3, subframes where the impact of inter-cell interference is insignificant and subframes where the impact of inter-cell interference is significant will be described. As shown in FIG. 3, in a radio frame, one or more fixed subframes and one or more flexible subframes are provided. Fixed subframes refer to subframes in which the direction of transmission is fixed between varying UL/DL configurations. Meanwhile, flexible subframes refer to subframes in which the direction of transmission is not fixed (that is, the direction of transmission may vary) between varying UL/DL configurations. Note that flexible subframes may be referred to as "dynamic subframes" as well.

As shown in FIG. 3, in UL/DL configurations 0 to 6, the subframes 0, 1, 5 and 6 are all downlink subframes. Note that the special subframes are subframes to switch between downlink subframes and uplink subframes, and are used primarily on the downlink. Consequently, the special subframes can be seen as downlink subframes. Also, in the UL/DL configurations 0 to 6, the subframes 2 are all uplink subframes. Consequently, in FIG. 3, the subframes 0, 1, 2, 5 and 6 become fixed subframes in which the direction of transmission is fixed among the UL/DL configurations 0 to 6.

Meanwhile, in the subframes 3 of FIG. 3, uplink subframes (in the UL/DL configurations 0, 1, 3, 4 and 6) and downlink subframes (in the UL/DL configurations 2 and 5) co-exist among the UL/DL configurations 0 to 6. Similarly, in the subframes 4 and 7 to 9 of FIG. 3, uplink subframes and downlink subframes co-exist among the UL/DL configurations 0 to 6. Consequently, in FIG. 3, the subframe 3, 4 and 7 to 9, become flexible subframes in which the direction of transmission is not fixed among the UL/DL configurations 0 to 6. Note that the fixed subframes and the flexible subframes are not limited to those shown in FIG. 3, and may be changed as appropriate depending on the UL/DL configuration used.

In fixed subframes, the direction of transmission is the same even when different UL/DL configurations are used between neighboring radio base stations, so that the impact of inter-cell interference is insignificant. On the other hand, in flexible subframes, when different UL/DL configurations are used between neighboring radio base stations, if the direction of transmission varies, the impact of inter-cell interference becomes significant.

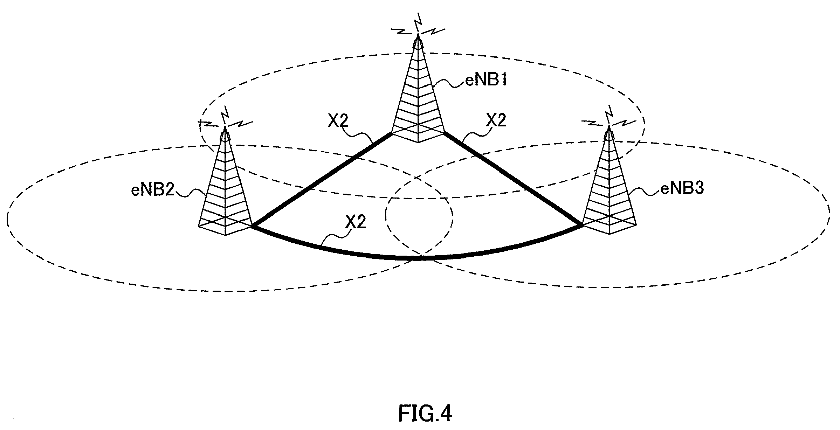

Now, the radio base stations are inter-connected via an inter-base-station interface (for example, the X2 interface), as shown in FIG. 4. In FIG. 4, the interference control among the radio base stations 1 to 3 (eNBs 1 to 3) is implemented by means of signaling via the inter-base-station interface (backhaul signaling). Note that, although a case will be described below in which the X2 interface will be used as the inter-base-station interface, this is by no means limiting.

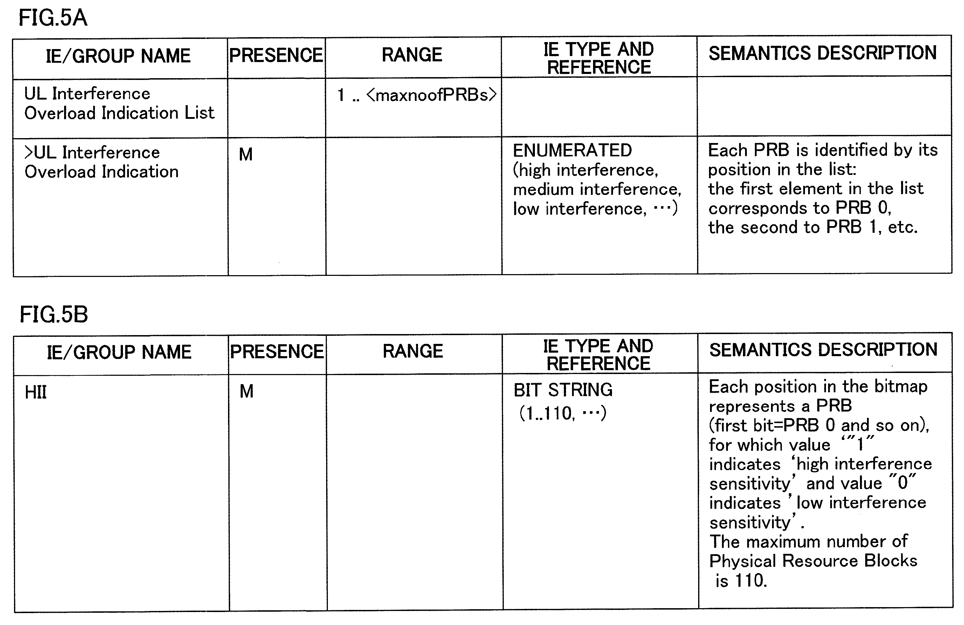

With reference to FIGs. 5 to 8, an example of interference control by means of signaling via the X2 interface will be described. FIG. 5 is a diagram to show examples of information elements (IEs) that are signaled via the X2 interface.

In FIG. 5A, a "UL Interference Overload Indication" (hereinafter referred to as "IOI") is shown. The IOI represents the level of interference which a radio base station receives (Interference Overload), on a per PRB (Physical Resource Block) basis. For example, in FIG. 5A, the IOI represents the above interference level in three levels, namely high, medium and low.

Also, in FIG. 5B, a UL High Interference Indication (hereinafter referred to as "HII") is shown. The HII represents the level of interference which a radio base stations gives (interference sensitivity), on a per PRB basis. For example, in FIG. 5B, the HII represents the above interference level in two values, namely "1" (high) and "0" (low).

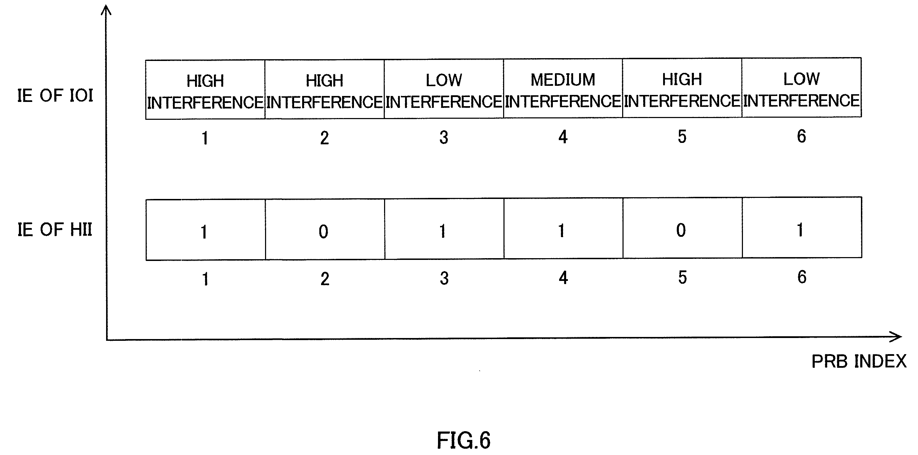

FIG. 6 is a diagram to show an example of configuring IOIs and HIIs. Note that, although maximum six PRBs are used in FIG. 6, this is by no means limiting. Also, PRBs are frequency-domain resource units, and are also referred to as "physical resource blocks," "resource blocks," and so on. PRBs are identified by PRB indices. Also, in the radio base stations, scheduling is carried out in PRB units.

With the IOIs shown in FIG. 6, in each of PRBs #1 to #6, the above interfered level is set in the three levels of high, medium and low. On the other hand, with the HIIs shown in FIG. 6, in each of PRBs #1 to #6, the level of interference which a radio base station receives is set in the two values of "1" (high) and "0" (low).

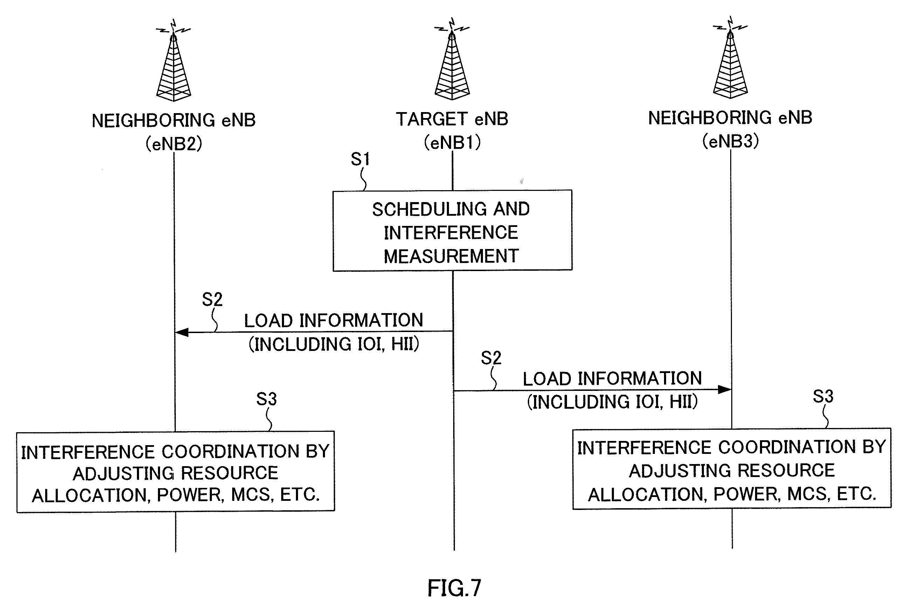

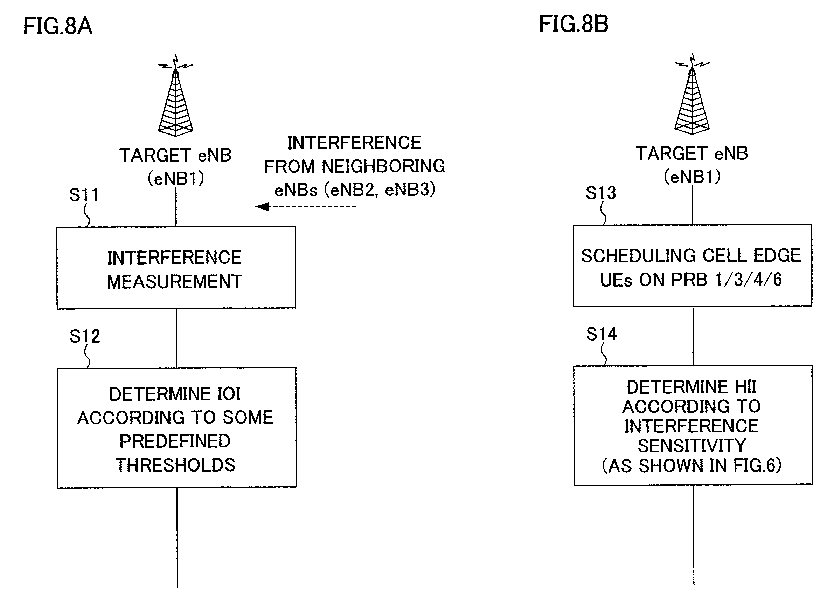

FIG. 7 and FIG. 8 are diagrams to explain examples of interference control to use IOIs and HIIs. Note that, in the interference controls shown in FIG. 7 and FIG. 8, the radio base station 1 (target eNB) shown in FIG. 4 carries out signaling to the neighboring radio base stations 2 and 3 (neighboring eNBs) via the X2 interface. Also, in FIG. 7, maximum six PRBs are used as in FIG. 6.

As shown in FIG. 7, the radio base station 1 determines the IOIs and HIIs to transmit to the radio base stations 2 and 3 (step S1). To be more specific, as shown in FIG. 8A, the radio base station 1 measures the interference received from the radio base stations 2 and 3 (step S11). Also, the radio base station 1 determines the IOI configuration values (for example, see FIG. 6) based on a comparison of the measured interference and a predetermined threshold (step S12).

Also, as shown in FIG. 8B, the radio base station 1 schedules, for example, PRBs #1, #3, #4 and #6 for cell-edge user terminals (cell-edge UEs) (step S13). Also, the radio base station 1 determines the HII configuration values based on the scheduling result (step S14). To be more specific, the transmission power for the cell-edge user terminals becomes relatively high, so that the interference by downlink signals from the radio base station 1 increases. Consequently, as shown in FIG. 6, the radio base station 1 configures the bits to correspond to the HIIs of PRBs #1, #3, #4 and #6 to "1" (which represents that the level of interference is high).

As shown in FIG. 7, the radio base station 1 transmits a load information message (LOAD INFORMATION), which contains the IOIs and HIIs determined in FIG. 8A and FIG. 8B, to the radio base stations 2 and 3 via the X2 interface (step S2). The radio base stations 2 and 3 each adjust the resource allocation, the transmission power (power), and the modulation and coding scheme (MCS) based on the IOIs and HIIs from the radio base station 1, and execute interference control (step S3).

However, interference control such as that described above does not focus on the fact that the impact of inter-cell interference is significant in the flexible subframes of FIG. 3, compared to the fixed subframes. Consequently, when different UL/DL configurations are used between radio base stations, there is a threat that the inter-cell interference produced in the flexible subframes cannot be reduced sufficiently. Consequently, the present inventors have come up with the idea of reducing the impact of inter-cell interference in flexible subframes by way of signaling via an inter-base-station interface.

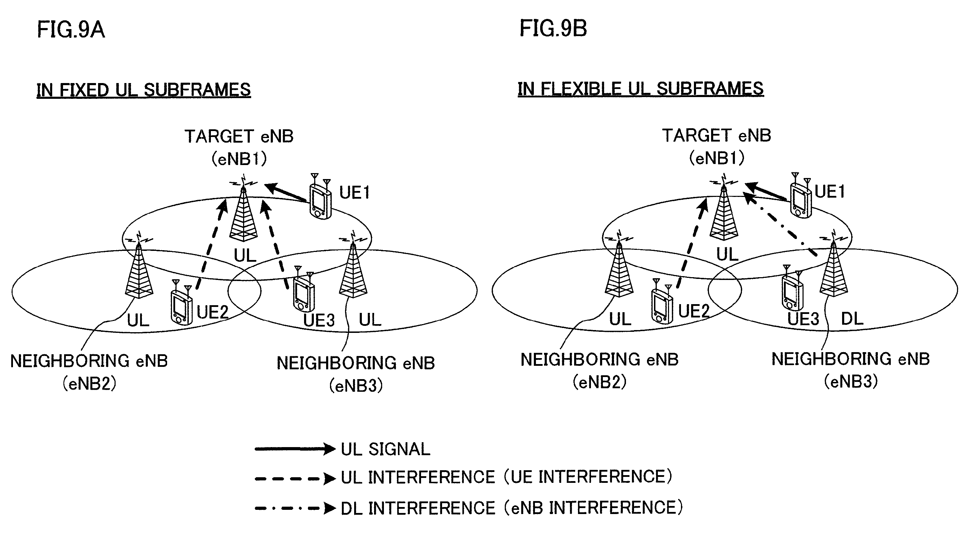

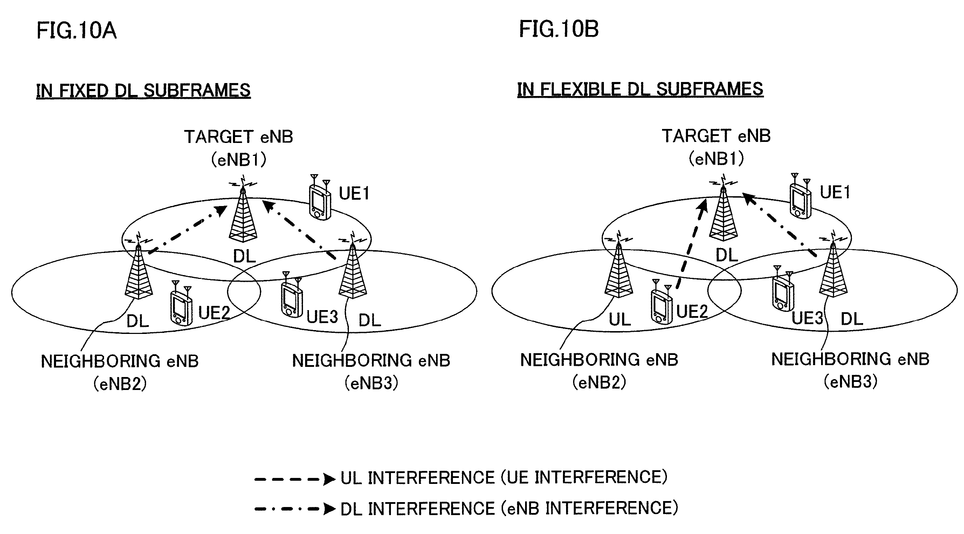

Now, the interference to be controlled in the radio communication method according to the present invention will be described with reference to FIG. 9 and FIG. 10. FIG. 9 provides diagrams to explain interference in uplink subframes. The uplink subframes include fixed uplink subframes (fixed UL subframes) and flexible uplink subframes (flexible UL subframes). The fixed uplink subframes are fixed subframes in which the direction of transmission is upward (for example, the subframe 2 of FIG. 3). On the other hand, the flexible uplink subframes are flexible subframes in which the direction of transmission is upward (for example, the subframes 3, 7 and 8 of the UL/DL configuration 1 in FIG. 3).

As shown in FIG. 9A, in fixed uplink subframes, the uplink signal (UL signal) from the user terminal 1 to the radio base station 1 (target eNB) receives interference from the uplink signals from the user terminals 2 and 3 to the radio base stations 2 and 3 (neighboring eNBs). This interference by the uplink signals from the user terminals 2 and 3 is referred to as "uplink interference" (UL Interference) or "terminal interference" (UE interference).

Meanwhile, as shown in FIG. 9B, in flexible uplink subframes, the uplink signal from the user terminal 1 to the radio base station 1 receives the uplink interference by the uplink signal from the user terminal 2 to the radio base station 2 and the interference by the downlink signal from the radio base station 3 to the user terminal 3. This interference by the downlink signal from the radio base station 3 is referred to as "downlink interference" (DL Interference) or "base station interference" (eNB Interference). Note that, in particular, the downlink interference in flexible uplink subframes is referred to as "inter-base-station interference" (eNB-to-eNB interference).

FIG. 10 provides diagrams to explain interference in downlink subframes. The downlink subframes include fixed downlink subframes (fixed DL subframes) and flexible downlink subframes (flexible DL subframes). The fixed downlink subframes are fixed subframes in which the direction of transmission is downward (for example, the subframe 0, 1, 5 and 6 in FIG. 3). On the other hand, the flexible downlink subframes are flexible subframes in which the direction of transmission is downward (for example, the subframes 4 and 9 of the UL/DL configuration 1 in FIG. 3).

As shown in FIG. 10A, in fixed downlink subframes, the downlink signal from the radio base station 1 (target eNB) to the user terminal 1 receives the downlink interference by the downlink signals from the radio base stations 2 and 3 (neighboring eNBs) to the user terminals 2 and 3. The radio base station 1 can measure the received power (for example, the RSRP: Reference Signal Received Power) of the reference signals (for example, CRSs: Cell-specific Reference Signals) from the radio base stations 2 and 3 and estimate this downlink interference.

Meanwhile, as shown in FIG. 10B, in flexible downlink subframes, the downlink signal from the radio base station 1 (target eNB) to the user terminal 1 receives the uplink interference by the uplink signal from the user terminal 2 to the radio base station 2 and the downlink interference by the downlink signal from the radio base station 3 to the user terminal 3. As in FIG. 10A, for example, the radio base station 1 can measure the RSRP of the CRSs from the radio base stations 2 and 3 and estimate this downlink interference. Note that, in particular, the uplink interference in flexible downlink subframes is referred to as "inter-terminal interference" (UE-to-UE interference).

The radio communication method according to the present invention is used in interference control in fixed subframes (in particular, fixed uplink subframes) and flexible subframes (in particular, flexible uplink subframes) such as those described above. To be more specific, with the control method according to the present invention, a radio base station carries out radio communication with user terminals by using UL/DL configurations, which are the configurations of uplink subframes and downlink subframes in a radio frame. Also, the radio base station determines the interference control information (described later) that is use in the above interference control. The radio base station transmits the determined interference control information to neighboring radio base stations via an inter-radio-base-station interface.

Now, the radio communication method according to the present invention will be described below in detail. The radio communication method according to the present invention is used in a radio base station (target eNB) that is connected with one or more neighboring radio base stations (neighboring eNBs) via an inter-radio-base-station interface. Note that, although the UL/DL configurations shown in FIGs. 1 and 3 will be used hereinafter, the applicable UL/DL configurations are by no means limited to these. Also, although the UL/DL configurations will be changed dynamically, these may be changed semi-statically or may be configured on a fixed basis. Also, although the X2 interface will be used as the inter-radio-base-station interface, this is by no means limiting.

### (Aspect 1)

With the radio communication method according to aspect 1, the above interference control information may include the IOI and inter-base-station interference information (eNB-to-eNB interference indicator) that represents whether or not inter-base-station interference (eNB-to-eNB interference) is present in flexible subframes. The IOI is interfered-level information, which represents the level of interference received in a radio base station. Note that the IOI may represent the above interference level on a per PRB basis. Also, the inter-base-station interference information (eNB-to-eNB interference indicator) may be fluctuation-level information (aspect 1.1), may be subframe-type information (aspect 1.2) or may be interference-type information (aspect 1.3).

In the radio communication method according to aspect 1, a radio base station transmits a load information message (LOAD INFORMATION), which contains the IOI and inter-base-station interference information to neighboring radio base stations via the X2 interface.

### (Aspect 1.1)

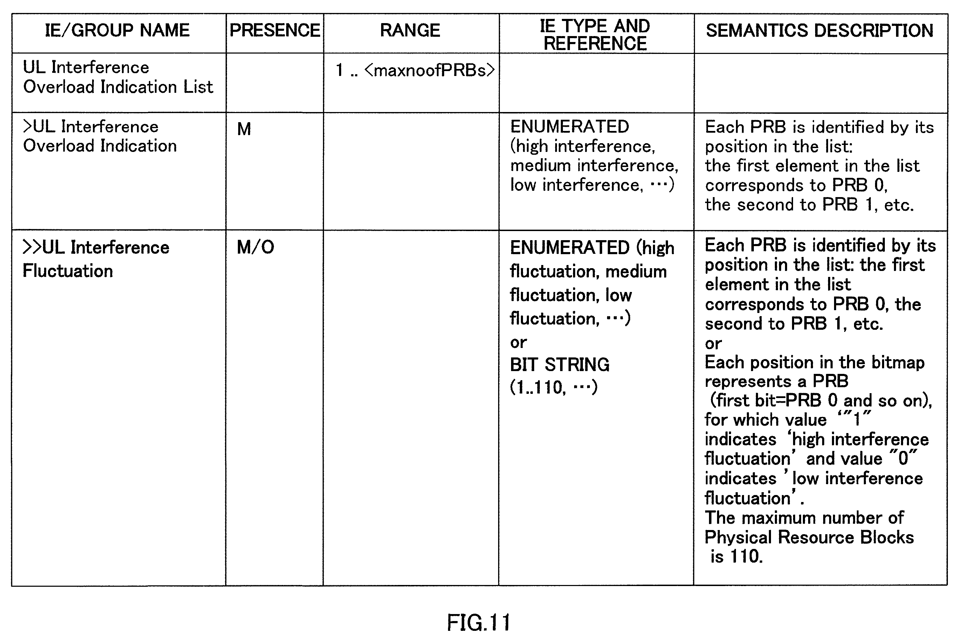

Now, the radio communication method according to aspect 1.1 will be described with reference to FIGs. 11 to 13. In the radio communication method according to aspect 1.1, fluctuation-level information is used as the inter-base-station interference information. The fluctuation-level information represents the level of fluctuation between the interference which a radio base station receives in fixed subframes and the interference which the radio base station receives in flexible subframes. Note that the fluctuation-level information may represent the level of fluctuation between the interference in fixed uplink subframes (see FIG. 9A) and the interference in flexible uplink subframes (see FIG. 9B). Also, the fluctuation-level information may represent the above fluctuation level on a per PRB basis.

FIG. 11 is a diagram to show examples of the fluctuation-level information according to aspect 1.1. As shown in FIG. 11, the fluctuation-level information (UL interference fluctuation) may represent the above fluctuation level in three levels, namely high (high fluctuation), medium (medium fluctuation) and low (low fluctuation). Alternatively, the fluctuation-level information (UL interference fluctuation) may represent the above fluctuation level in the two values of "1" (high (high fluctuation)) and "0" (low (low fluctuation)) as well.

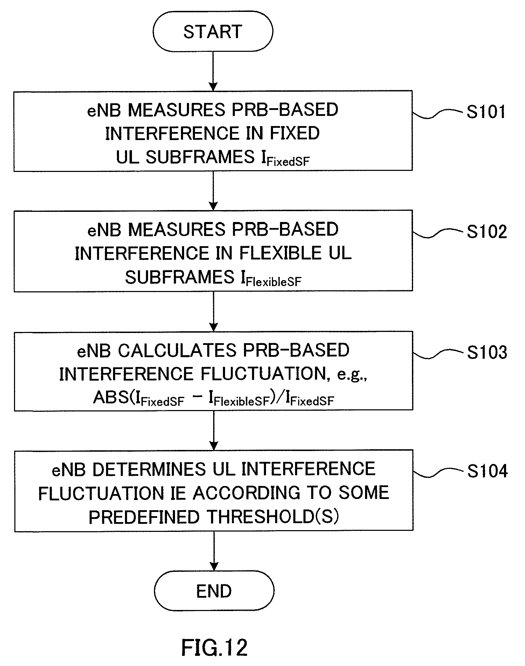

FIG. 12 is a flowchart to show the radio communication method according to aspect 1.1. Note that, in FIG. 12, the fluctuation-level information represents the level of fluctuation between the interference in fixed uplink subframes and the interference in flexible uplink subframes.

As shown in FIG. 12, a radio base station (eNB) measures the amount of interference I_{FixedSF} in fixed uplink subframes on a per PRB basis (step S101). To be more specific, the radio base station measures the amount of interference with respect to the uplink interference shown in FIG. 9A, as the amount of interference I_{FixedSF}.

The radio base station measures the amount of interference I_{FlexibleSF} in flexible uplink subframes on a per PRB basis (step S102). To be more specific, the radio base station measures the sum of the amount of interference with respect to the uplink interference and the amount of interference with respect to the downlink interference, which are shown in FIG. 9B, as the amount of interference I_{FlexibleSF}.

Based on the amount of interference I_{FixedSF} and the amount of interference I_{FlexibieSF} measured, the radio base station calculates the amount of fluctuation of interference between fixed uplink subframes and flexible uplink subframes on a per PRB basis (step S103). For example, the above amount of fluctuation may be calculated by dividing the absolute value of the difference between the above amount of interference I_{FixedSF} and the amount of interference I_{FlexibleSF} by the amount of interference I_{FixedSF}.

The radio base station determines the fluctuation-level information (UL interference fluctuation) based on a comparison result of the calculated amount of fluctuation and a predetermined threshold (step S104).

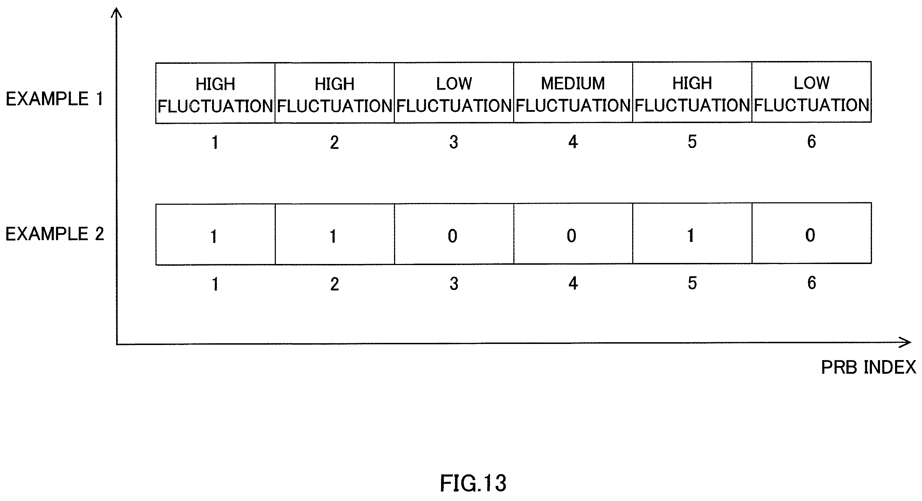

FIG. 13 is a diagram to show an example of determining the fluctuation-level information according to aspect 1.1. Note that, although maximum six PRBs are used in FIG. 13, this is by no means limiting. As shown in FIG. 6, in each of PRBs #1 to #6, the fluctuation-level information may be determined in the three levels of high, medium and low (aspect 1). Alternatively, in each of PRBs #1 to #6, the fluctuation-level information may be determined in the two values of "1" (high) and "0" (low) (aspect 2).

With the radio communication method according to aspect 1.1, the IOIs and fluctuation-level information (UL interference fluctuation) are signaled via the X2 interface. Consequently, without reporting the IOIs in both fixed subframes and flexible subframes, it is possible to represent the presence of inter-base-station interference, and reduce the amount of signaling.

### (Aspect 1.2)

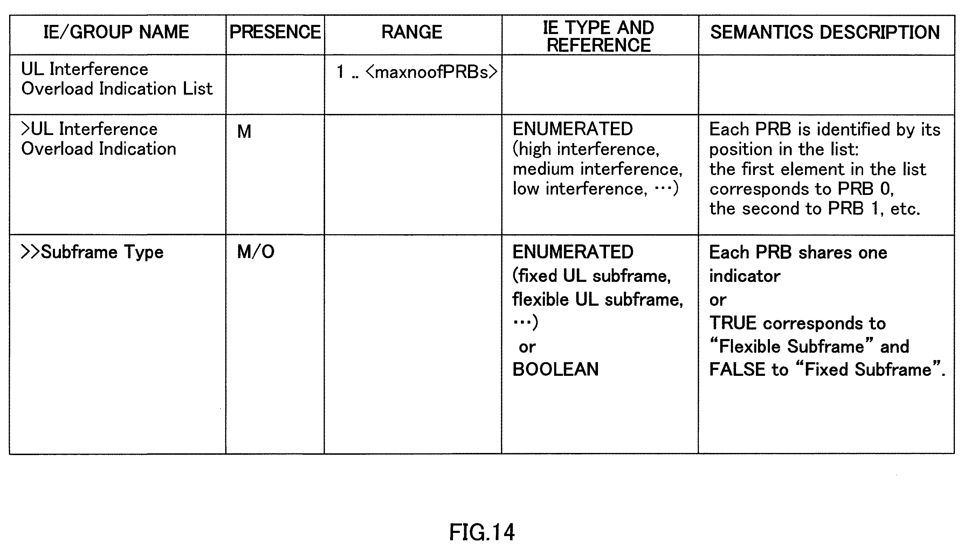

The radio communication method according to aspect 1.2 will be described with reference to FIGs. 14 to 17. With the radio communication method according to aspect 1.2, subframe-type information is used as the inter-base-station interference information. The subframe-type information represents whether the level of interference represented by the IOI is the interference level of fixed subframes or flexible subframes. Note that the subframe-type information may represent whether the level of interference represented by the IOI is the interference level of fixed uplink subframes or flexible uplink subframes. Note that the subframe-type information may be shared between a plurality of PRBs.

FIG. 14 is a diagram to show examples of the subframe-type information according to aspect 1.2. As shown in FIG. 14, the subframe-type information (subframe type) may represent which of fixed uplink subframes and flexible uplink subframes the interference level pertains to, by configuring the subframe type (for example, fixed UL subframes, flexible UL subframes, etc.). Alternatively, the subframe-type information (subframe type) may represent which of fixed uplink subframes and flexible uplink subframes the interference level pertains to, by configuring "TRUE" or "FALSE."

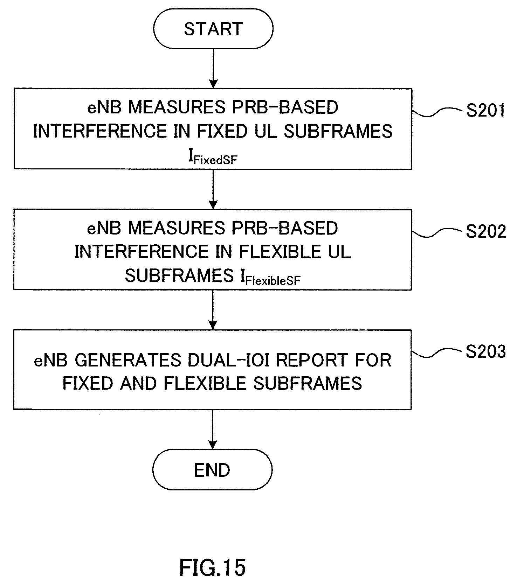

FIG. 15 is a flowchart to show the radio communication method according to aspect 1.2. Note that, in FIG. 15, the subframe-type information represents whether the level of interference represented by the IOI is the interference level of fixed uplink subframes or flexible uplink subframes.

As shown in FIG. 15, the radio base station (eNB) measures the amount of interference I_{FixedSF} in fixed uplink subframes on a per PRB basis (step S201). Also, the radio base station measures the amount of interference I_{FlexibleSF} in flexible uplink subframes on a per PRB basis (step S202). Note that the details of the method of measuring the amount of interference I_{FixedSF} and the amount of interference I_{FlexibleSF} are the same as in steps S101 and S102 in FIG. 12, and therefore will not be described.

The radio base station determines the IOIs in fixed uplink subframes based on a comparison result of the measured amount of interference I_{FixedSF} and a predetermined threshold, and determines the IOIs in flexible uplink subframes based on a comparison result of the measured amount of interference I_{FlexibleSF} and a predetermined threshold (step S203). The radio base station transmits the IOIs in the fixed uplink subframes and the flexible uplink subframes and the subframe-type information to the neighboring radio base stations (dual-IOI report).

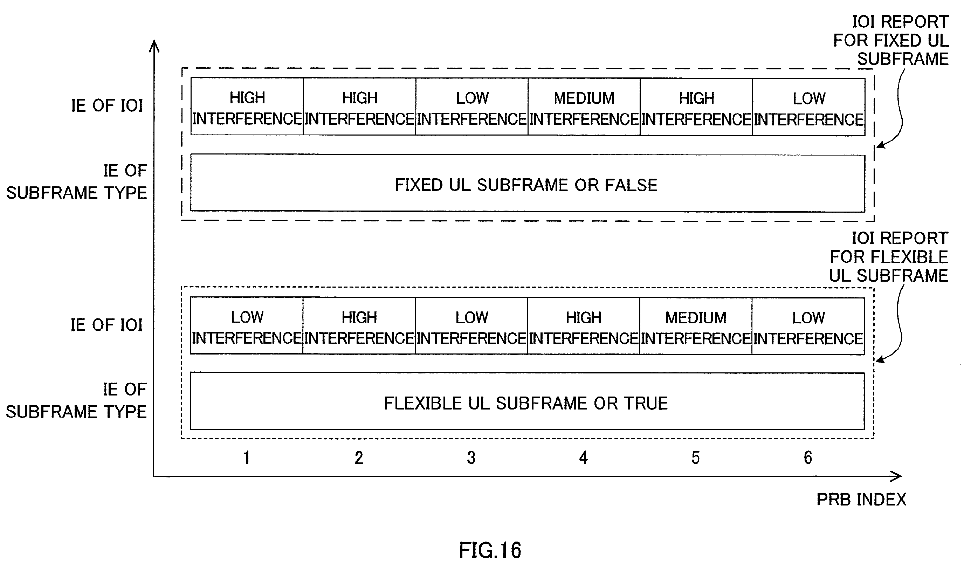

FIG. 16 is a diagram to explain dual-IOI report according to aspect 1.2. Note that, although maximum six PRBs are used in FIG. 16, this is by no means limiting. As shown in FIG. 16, in each of PRBs #1 to #6, the IOIs of fixed uplink subframes represent the level of interference which the radio base station receives in the fixed uplink subframes in the three levels of high, medium and low. Also, the subframe-type information (subframe type) is shared between PRBs #1 to #6, and represents that the above interference level is the interference level of fixed uplink subframes, by using "fixed UL subframe" or "FALSE.

Likewise, in each of PRBs #1 to #6, the IOIs of flexible uplink subframes represent the level of interference which the radio base station gives in the flexible uplink subframes, in the three levels of high, medium and low. Also, the subframe-type information (subframe type) is shared between PRBs #1 to #6, and represents that the above interference level is the interference level of flexible uplink subframes, by using "flexible UL subframe" or "TRUE.

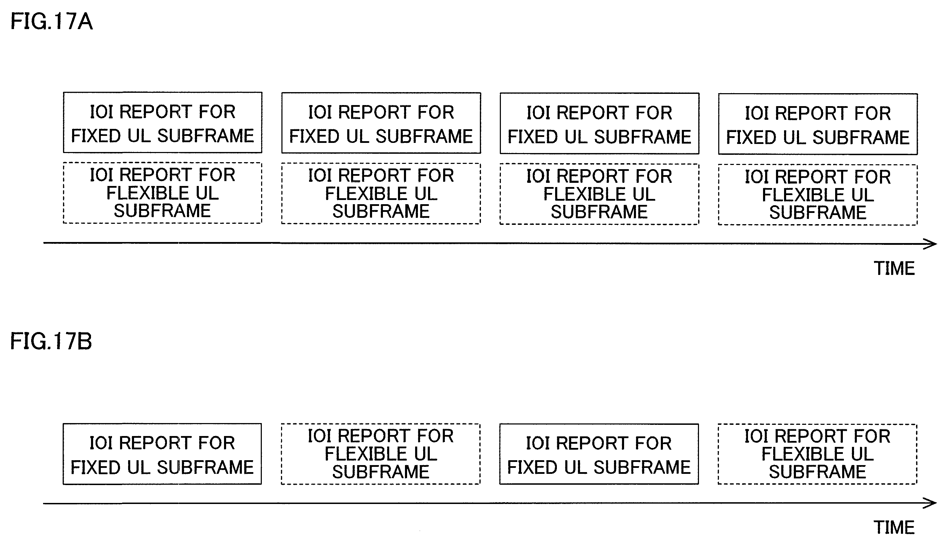

FIG. 17 is a diagram to explain examples of dual-IOI report signaling according to aspect 1.2. The IOIs of fixed uplink subframes and the IOIs of flexible uplink subframes may be signaled at the same time, as shown in FIG. 17A. Alternatively, the IOIs of fixed uplink subframes and the IOIs of flexible uplink subframes may be signaled alternately as shown in FIG. 17B.

With the radio communication method according to aspect 1.2, the IOIs of fixed subframes and flexible subframes and the subframe-type information (subframe type) are signaled to neighboring radio base stations via the X2 interface. Consequently, the neighboring radio base stations can identify the presence of inter-base-station interference by comparing the IOIs of fixed subframe and flexible subframes.

### (Aspect 1.3)

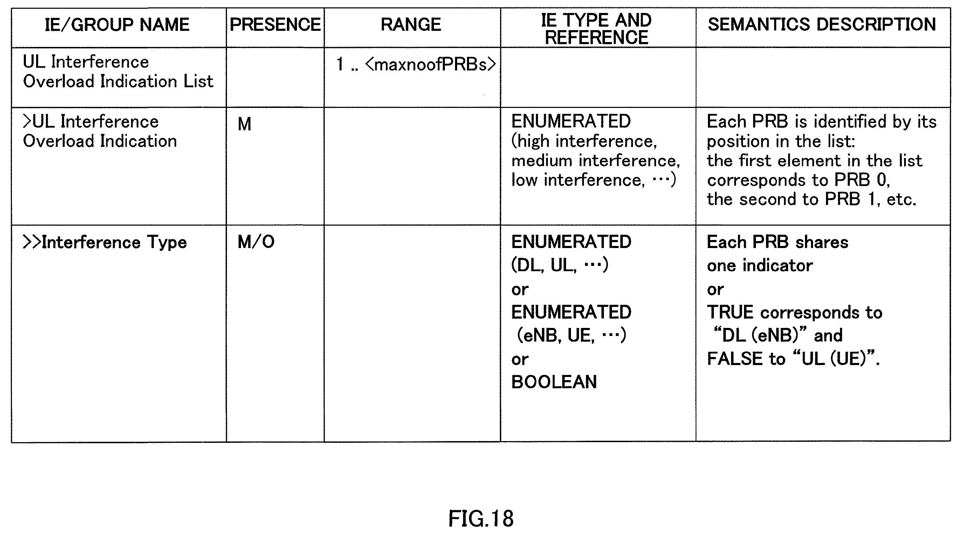

The radio communication method according to aspect 1.3 will be described with reference to FIGs. 18 to 21. With the radio communication method according to aspect 1.3, interference-type information is used as the inter-base-station interference information. The interference-type information represents whether the level of interference represented by the IOI is the interference level of uplink interference (see FIG. 9A) or downlink interference (see FIG. 9B, FIG. 10A and FIG. 10B). Note that the subframe-type information may be shared between a plurality of PRBs.

FIG. 18 is a diagram to show examples of the interference-type information according to aspect 1.3. As shown in FIG. 18, the interference-type information (interference type) may represent which of downlink interference and uplink interference the interference level pertains to, by configuring the type of interference (for example, DL (eNB), UL (UE), etc.). Alternatively, the interference-type information (interference type) may represent which of downlink interference and uplink interference the interference level pertains to, by configuring "TRUE" or "FALSE.

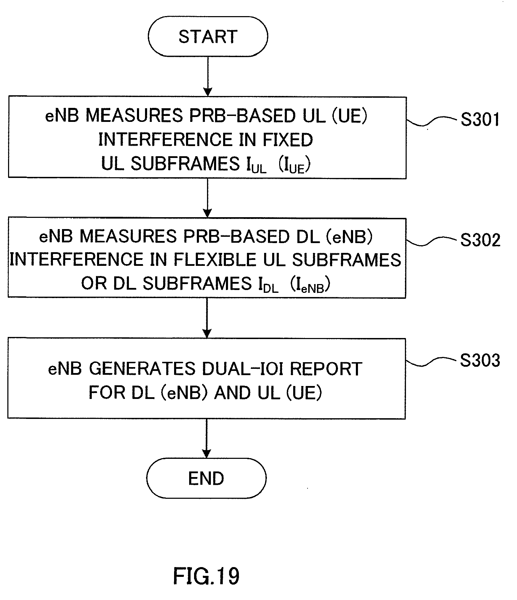

FIG. 19 is a flowchart to show the radio communication method according to aspect 1.3. As shown in FIG. 19, a radio base station (eNB) measures the amount of interference with respect to uplink interference, I_{UL} (I_{UE}), on a per PRB basis (step S301). To be more specific, the radio base station measures the amount of interference with respect to the uplink interference shown in FIG. 9A, as the amount of interference I_{UL} (I_{UE}).

The radio base station measures the amount of interference I_{DL} (I_{eNB}) by downlink interference on a per PRB basis (step S302). To be more specific, the radio base station measures at least one of the downlink interference in flexible uplink subframes shown in FIG. 9B, the downlink interference in fixed downlink subframes shown in FIG. 10A and the downlink interference in flexible downlink subframes shown in FIG. 10B, as the amount of interference I_{DL} (I_{eNB}). Note that this amount of interference I_{DL} (I_{eNB}) may be estimated by measuring, in the radio base station, the received power (for example, the RSRP) of reference signals (for example, CRSs) from the neighboring radio base stations.

The radio base station determines the IOIs of uplink interference and the IOIs of downlink interference based on a comparison result of the measured amount of interference I_{UL} (I_{UE}) and the amount of interference I_{DL} (I_{eNB}), with a predetermined threshold (step S303). The radio base station transmits the IOIs of uplink interference and downlink interference and the interference-type information, to the neighboring radio base station (dual-IOI report).

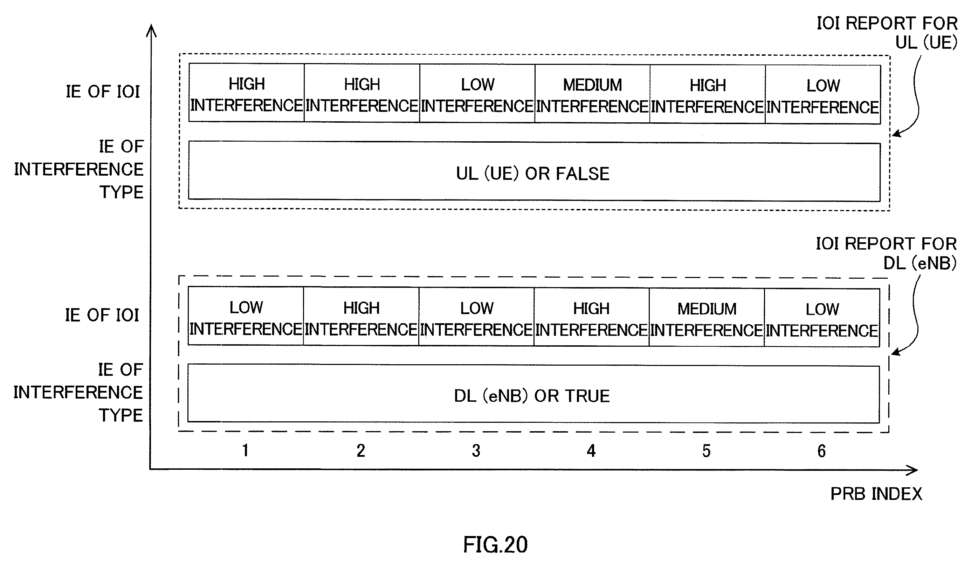

FIG. 20 is a diagram to explain dual-IOI report according to aspect 1.3. Note that, although maximum six PRBs are used in FIG. 20, this is by no means limiting. As shown in FIG. 20, in each of PRBs #1 to #6, the IOIs of uplink interference represent the level of interference which the radio base station receives from uplink interference, in the three levels of high, medium and low. Also, the interference-type information (interference type) is shared between PRBs #1 to #6, and represents that the above interference level is the interference level of uplink interference, by using "UL (UE)" or "FALSE.

Likewise, as shown in FIG. 20, in each of PRBs #1 to #6, the IOI of downlink interference represents the level of interference which the radio base station receives from downlink interference, in the three levels of high, medium and low. Also, the interference-type information (interference type) is shared between PRBs #1 to #6, and represents that the above level of interference is the interference level of downlink interference, by using "DL (eNB)" or "TRUE.

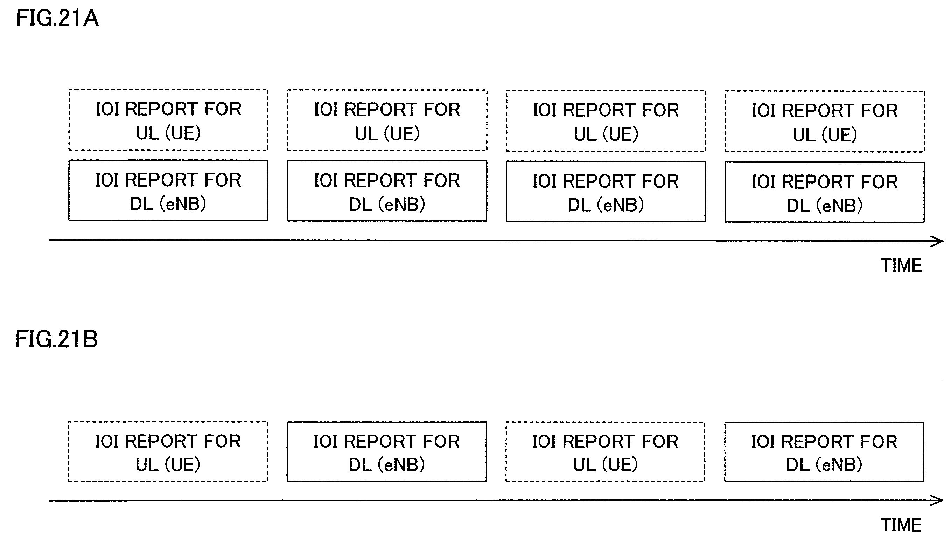

FIG. 21 provides diagrams to explain dual-IOI report signaling according to aspect 1.3. The IOI of uplink interference and the IOI of downlink interference may be signaled at the same time, as shown in FIG. 21A. Alternatively, the IOI of uplink interference and the IOI of downlink interference may be signaled alternately as shown in FIG. 21B.

With the radio communication method according to aspect 1.3, the IOIs of uplink interference and downlink interference and the interference-type information (interference type) are signaled to the neighboring radio base stations via the X2 interface. Consequently, the neighboring radio base stations can identify the presence of inter-base-station interference by comparing the IOIs of uplink interference and downlink interference.

### (Aspect 2)

With the radio communication method according to aspect 2, the above interference control information may include the HII and subframe-type information (subframe type). The HII is interfering level information, which represents the level of interference which a radio base station gives. Note that the HII may represent the above interference level on a per PRB basis.

The subframe-type information represents whether the level of interference represented by the HII is the interference level of fixed subframes or flexible subframes. Also, the subframe-type information may represent whether the level of interference represented by the HII is the interference level of fixed uplink subframes or flexible uplink subframes. Also, the subframe-type information may be shared between a plurality of PRBs.

Note that the above HII and subframe-type information make it possible to identify the resources in which the neighboring radio base stations receive high interference. Consequently, the neighboring radio base station can use the above HII and subframe-type information in resource allocation for user terminals. Consequently, the above HII and subframe-type information are also referred to as the "DL/UL resource allocation indicator" as well.

In the radio communication method according to aspect 2, the radio base station transmits a load information message (LOAD INFORMATION), which contains the above HII and subframe-type information, to the neighboring radio base stations via the X2 interface.

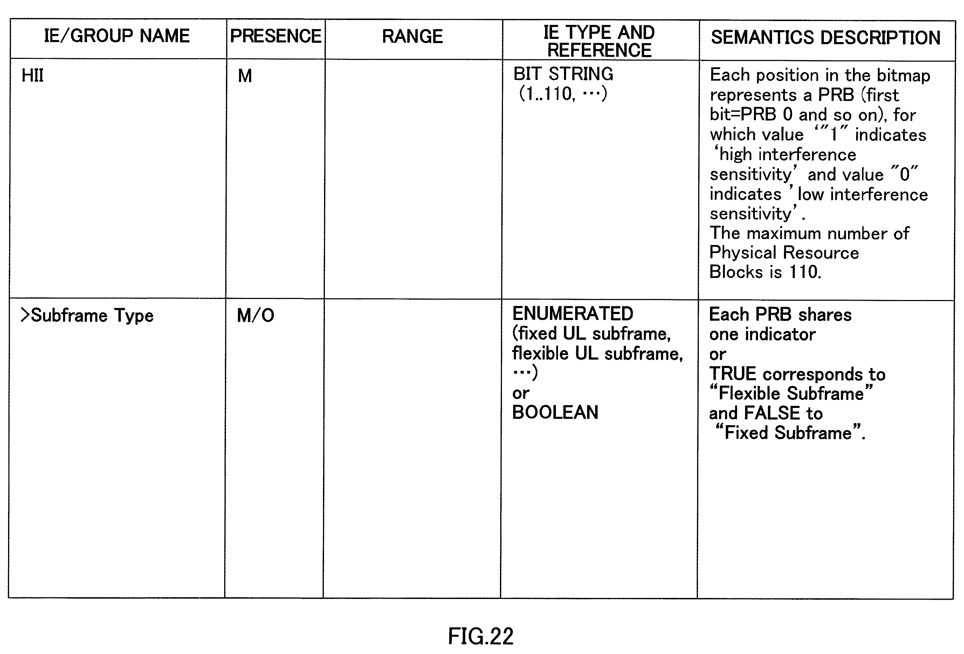

FIG. 22 is a diagram to show examples of the subframe-type information according to aspect 2. As shown in FIG. 22, the subframe-type information (subframe type) may represent which of fixed uplink subframes and flexible uplink subframes the level of interference pertains to, by configuring the subframe type (for example, fixed UL subframes, flexible UL subframes, etc.). Alternatively, the subframe-type information (subframe type) may represent which of fixed uplink subframes and flexible uplink subframes the level of interference pertains to, by configuring "TRUE" or "FALSE.

With the radio communication method according to aspect 2, the radio base station transmits the HIIs of fixed subframes and flexible subframes and the subframe-type information to the neighboring radio base stations (dual-HII report). Note that the radio base station may transmit the HIIs of fixed uplink subframes and flexible uplink subframes and the subframe-type information to the neighboring radio base station (dual-HII report).

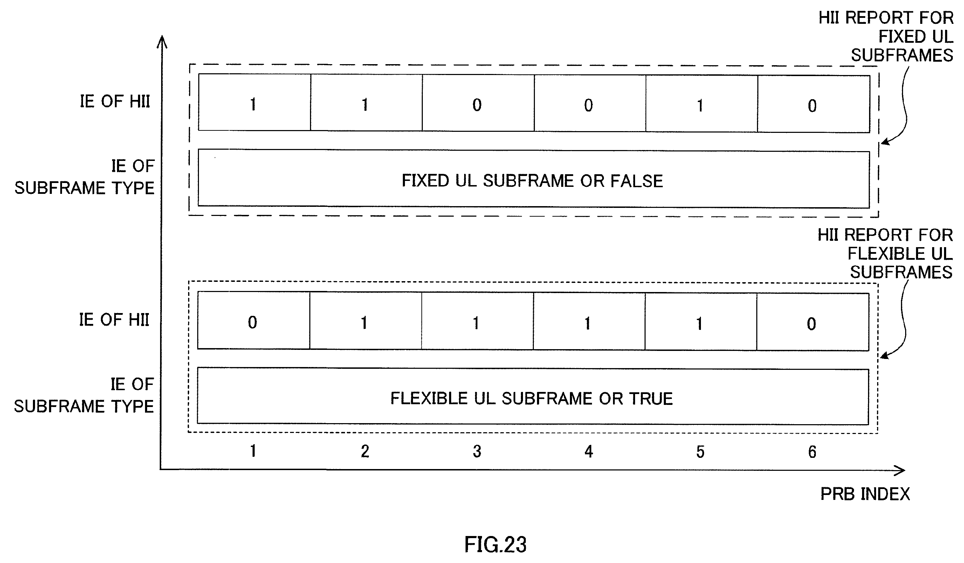

FIG. 23 is a diagram to explain dual-HII report according to aspect 2. Note that, although maximum six PRBs are used in FIG. 23, this is by no means limiting. As shown in FIG. 23, in each of PRBs #1 to #6, the HII of fixed uplink subframes represents the level of interference which the radio base station gives in the fixed uplink subframes, in the two values of 1 (high) and 0 (low). Also, the subframe-type information (subframe type) is shared between PRBs #1 to #6, and represents that the above interference level is the interference level of fixed uplink subframes, by using "fixed UL subframe" or "FALSE."

Likewise, in each of PRBs #1 to #6, the HII of flexible uplink subframes represents the level of interference which the radio base station gives in the flexible uplink subframes, in the two values of 1 (high) and 0 (low). Also, the subframe-type information (subframe type) is shared between PRBs #1 to #6, and represents that the above level of interference is the interference level of flexible uplink subframes, by using "flexible UL subframe" or "TRUE."

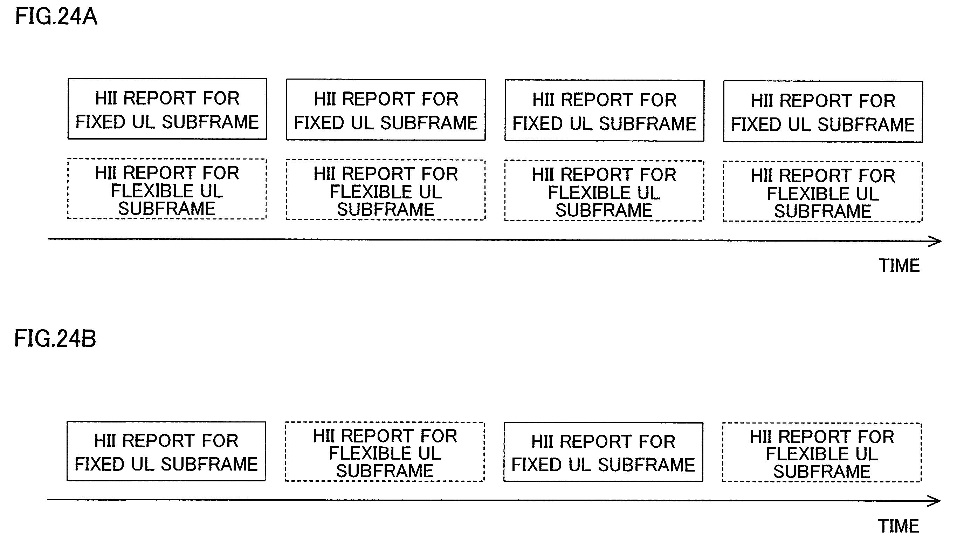

FIG. 24 is a diagram to explain an example of dual-HII report signaling according to aspect 2. The HII in fixed uplink subframes and the HII in flexible uplink subframes may be signaled at the same time as shown in FIG. 24A. Alternatively, the HII of fixed uplink subframes and the HII of flexible uplink subframes may be signaled alternately as shown in FIG. 24B.

With the radio communication method according to aspect 2, the HIIs in fixed subframes and flexible subframes and the subframe-type information (subframe type) are signaled to the neighboring radio base stations via the X2 interface. Consequently, the neighboring radio base stations can carry out scheduling more adequately by comparing the HIIs of fixed subframes and flexible subframes.

### (Aspect 3)

With the radio communication method according to aspect 3, the above interference control information may include UL/DL configuration information (dynamic TDD UL-DL-configuration indicator), which represents the UL/DL configuration that is used, when dynamic TDD to change the UL/DL configuration dynamically is employed. Here, the UL/DL configuration information (dynamic TDD UL-DL-configuration indicator) may be dynamic assignment information (aspect 3.1) or may be dynamic TDD configuration information (aspect 3.2).

In the radio communication method according to aspect 3, the radio base station transmits an update report message (ENB CONFIGURATION UPDATE), which contains UL/DL configuration information, to one or more neighboring radio base stations via the X2 interface. Here, the update report message is a message to report the update of the configuration of the radio base station to the neighboring radio base stations.

### (Aspect 3.1)

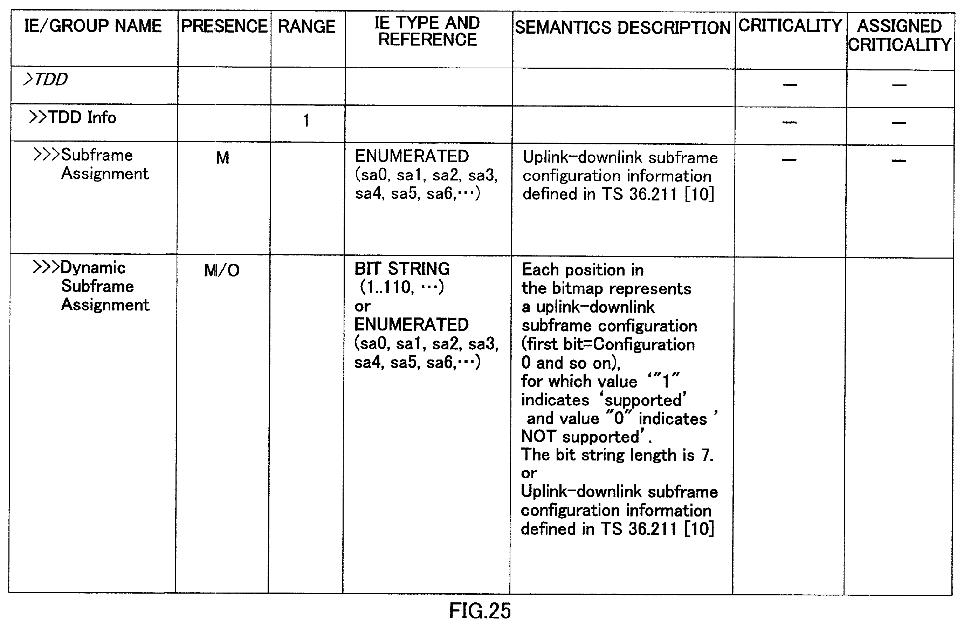

Now, the radio communication method according to aspect 3.1 will be described with reference to FIGs. 25 to 28. With the radio communication method according to aspect 3.1, dynamic assignment information is used as the above UL/DL configuration information. Here, the dynamic assignment information (dynamic subframe assignment) represents the assignment of an UL/DL configuration when dynamic TDD is employed.

FIG. 25 is a diagram to show examples of dynamic assignment information (dynamic subframe assignment) according to aspect 3.1. As shown in FIG. 25, the dynamic assignment information may represent the combination of UL/DL configurations to be used when dynamic TDD is employed (aspect 3.1.1) or represent one updated UL/DL configuration (aspect 3.1.2).

To be more specific, the dynamic assignment information according to aspect 3.1.1 represents the combination of UL/DL configurations to be used, in a bit string, as shown in FIG. 25. In this bit string, for example, the bits to correspond to the UL/DL configurations that are used may be configured to "1" (supported),and the bits to correspond to UL/DL configurations that are not used may be configured to "0" (NOT supported).

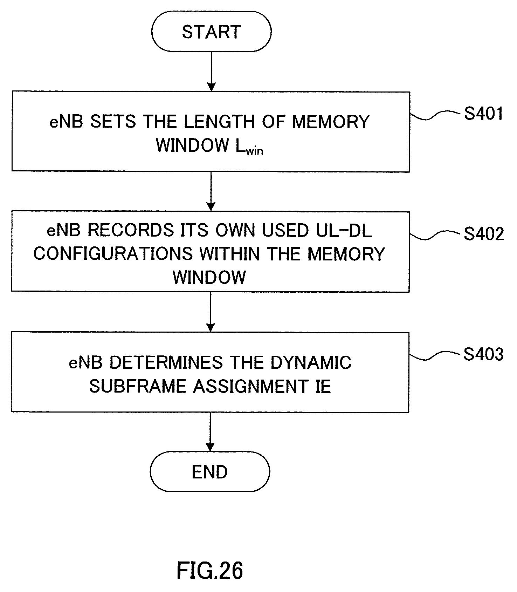

FIG. 26 is a flowchart to show the operation of determining the dynamic assignment information according to aspect 3.1.1. As shown in FIG. 26, the radio base station eNB configures the length of the memory window, L_{win} (step S401). Here, the memory window refers to the memory to record the UL/DL configurations to use, and the number of UL/DL configurations to be recorded changes depending on the length L_{win}.

The radio base station records the combination of UL/DL configurations to be used in the subject base station in the memory window (step S402). For example, if the UL/DL configurations 1, 2 and 6 can be used when dynamic TDD is employed the UL/DL configurations 1, 2 and 6 are recorded in the memory window.

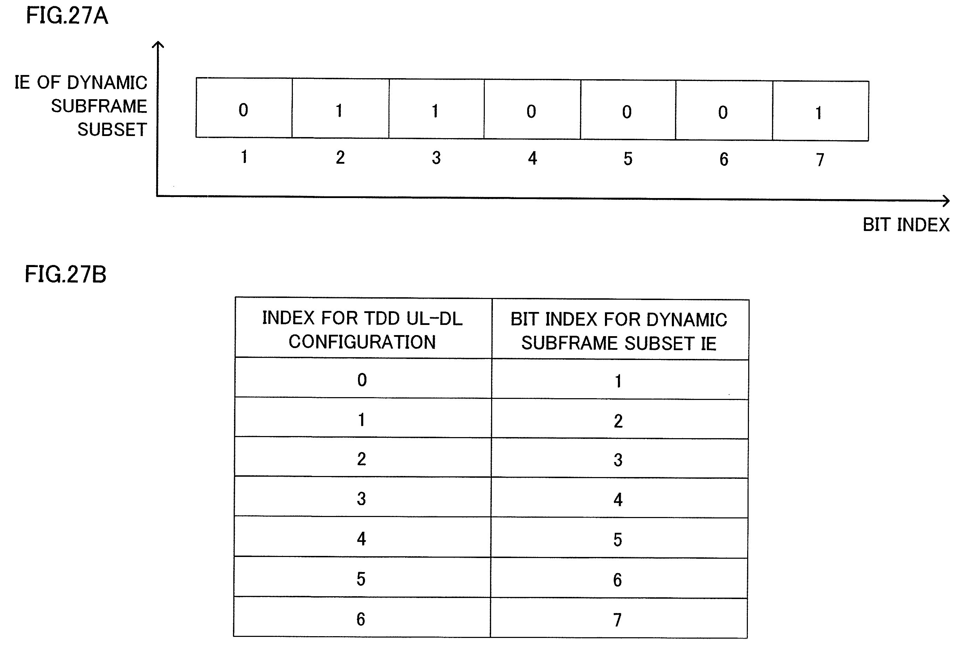

The radio base station determines the dynamic assignment information (dynamic subframe assignment) based on the combination of UL/DL configurations recorded in the memory window (step S403). For example, when the UL/DL configurations 1, 2 and 6 are recorded in the memory window, as shown in FIG. 27A, the bits to correspond to the UL/DL configurations 1, 2 and 6 are set to "1" (supported). Note that the UL/DL configurations 0 to 6 are, for example, associated with the bits 1 to 7 constituting the dynamic assignment information (dynamic subframe assignment), as shown in FIG. 27B.

With the dynamic assignment information according to aspect 3.1.1 (dynamic subframe assignment), the combination of UL/DL configurations that can be used when dynamic TDD is employed can be signaled. Consequently, it is possible to reduce the amount of signaling to send via the X2 interface, compared to the case where, every time the UL/DL configuration is updated, the updated UL/DL configuration is reported.

Meanwhile, the dynamic assignment information (dynamic subframe assignment) according to aspect 3.1.2 represents the UL/DL configuration which is changed every time the UL/DL configuration is changed. As shown in FIG. 25, the dynamic assignment information according to aspect 3.1.2 may be UL/DL configuration indicators such as, for example, "sa0" to represent the UL/DL configuration 0, "sa1" to represent the UL/DL configuration 1, "sa2" to represent the UL/DL configuration 2, "sa3" to represent the UL/DL configuration 3, "sa4" (UL/DL configuration 4) to represent the UL/DL configuration 4, "sa5" to represent the UL/DL configuration 5 and "sa6" to represent the UL/DL configuration 6.

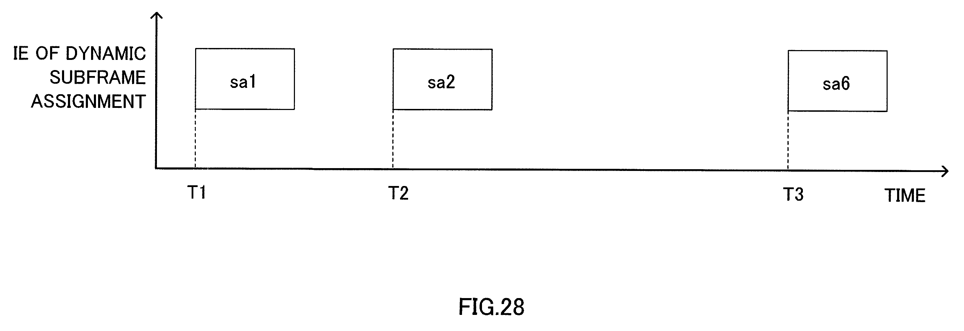

FIG. 28 is a diagram to explain the dynamic assignment information according to aspect 3.1.2 (dynamic subframe assignment). As shown in FIG. 28, with the radio communication method according to aspect 3.1.2, the radio base station transmits the dynamic assignment information to the neighboring radio base stations every time the UL/DL configuration is changed.

For example, in FIG. 28, the radio base station uses the UL/DL configuration 1 from time T1 to time T2, uses the UL/DL configuration 2 from time T2 to time T3 and uses the UL/DL configuration 6 from time T3. In this case, the radio base station transmits the dynamic assignment information (sa1) to represent the UL/DL configuration 1 to the neighboring radio base stations at time T1. Also, at time T2, the radio base station transmits the dynamic assignment information (sa2) to represent the UL/DL configuration 2 to the neighboring radio base stations. Also, at time T3, the radio base station transmits the dynamic assignment information (sa6) to represent the UL/DL configuration 6 to the neighboring radio base stations.

With the dynamic assignment information according to aspect 3.1.2 (dynamic subframe assignment), when dynamic TDD is employed, the radio base station can signal the changed UL/DL configuration every time the UL/DL configuration is changed. Consequently, the neighboring radio base stations can identify the change of the UL/DL configuration by the radio base station more quickly, and execute more adequate interference control.

### (Aspect 3.2)

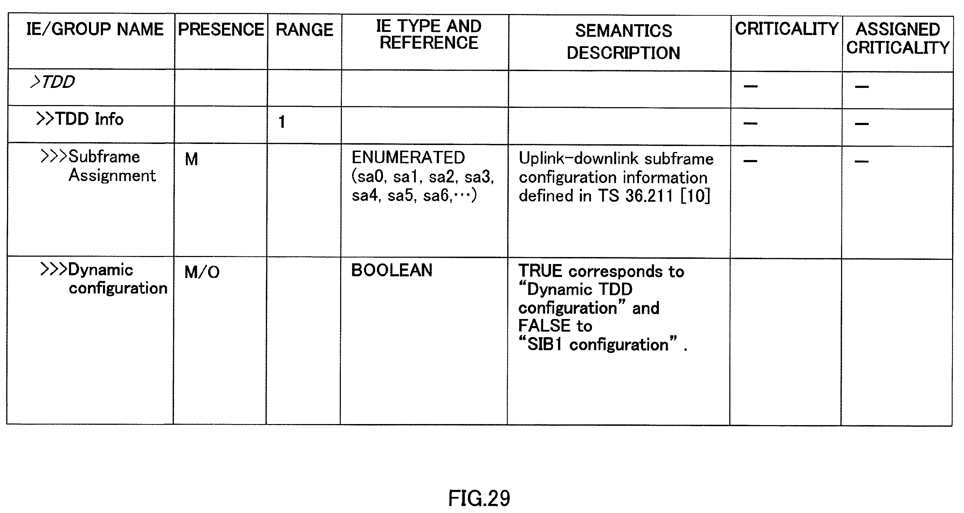

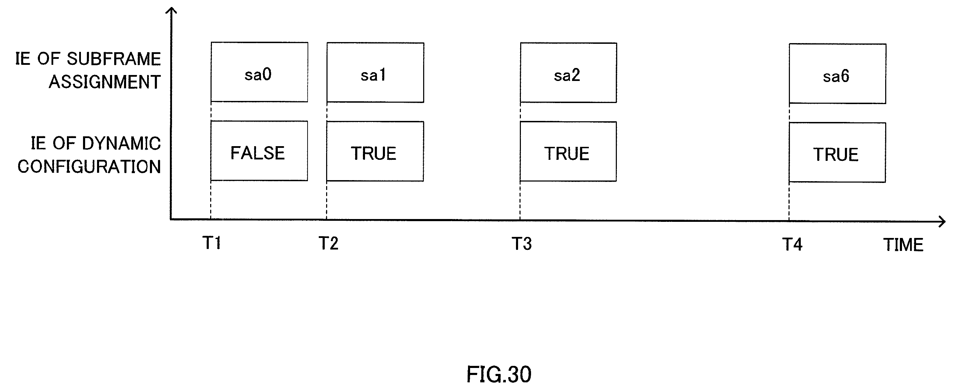

The radio communication method according to aspect 3.2 will be described with reference to FIGs. 29 and 30. With the radio communication method according to aspect 3.2, dynamic TDD configuration information is used as the above UL/DL configuration information. Here, the dynamic TDD configuration information (dynamic configuration) represents whether the UL/DL configuration represented by the assignment information (subframe assignment) is a UL/DL configuration that is configured dynamically (dynamic TDD configuration) or a UL/DL configuration that is configured semi-statically (SIB (System Information Block) 1 configuration).

FIG. 29 is a diagram to show examples of dynamic TDD configuration information (dynamic configuration) according to aspect 3.2. As shown in FIG. 29, the dynamic TDD configuration information may represent whether the UL/DL configuration represented by the assignment information (subframe assignment) is a UL/DL configuration that is configured dynamically (dynamic TDD configuration) or a UL/DL configuration that is configured semi-statically (SIB1 configuration), based on "TRUE" or "FALSE."

FIG. 30 is a diagram to explain the dynamic TDD configuration information (Dynamic configuration) according to aspect 3.2. As shown in FIG. 30, with the radio communication method according to aspect 3.2, every time the UL/DL configuration is updated, the radio base station transmits assignment information (subframe assignment) and dynamic TDD configuration information (dynamic configuration) to the neighboring radio base stations.

For example, in FIG. 30, the radio base station uses the UL/DL configuration 0, which is configured semi-statically, from time T1 to time T2. Also, the radio base station uses the UL/DL configuration 1, which is configured dynamically, from time T2 to time T3, uses the UL/DL configuration 2, which is configured dynamically, from time T3 to time T4, and uses the UL/DL configuration 6, which is configured dynamically, from time T4.

In this case, at time T1, the radio base station transmits the assignment information (sa0) to represent the UL/DL configuration 0, and dynamic TDD assignment information (FALSE), to the neighboring radio base stations. Also, at time T2, the radio base station transmits the assignment information (sa1) to represent the UL/DL configuration 1, and dynamic TDD configuration information (TRUE), to the neighboring radio base stations. Also, at time T3, the radio base station transmits the assignment information (sa2) to represent the UL/DL configuration 2, and dynamic TDD configuration information (TRUE), to the neighboring radio base stations. Also, at time T4, the radio base station transmits the assignment information (sa6) to represent the UL/DL configuration 6, and dynamic TDD configuration information (TRUE), to the neighboring radio base stations.

With the dynamic TDD configuration information according to aspect 3.2 (dynamic configuration), whether the UL/DL configurations is configured dynamically or configured semi-statically is reported, with UL/DL configuration assignment information (subframe assignment). By this means, it is possible to execute more adequate interference control based on whether or not the UL/DL configuration is configured dynamically.

### (Aspect 4)

With the radio communication method according to aspect 4, the above interference control information may include dynamic TDD support information (dynamic TDD), which represents whether or not dynamic TDD to change the UL/DL configuration dynamically is supported. Note that the dynamic TDD support information may be referred to as the "eIMTA capability indicator" as well.

In the radio communication method according to aspect 4, the radio base station transmits an update report message (ENB CONFIGURATION UPDATE), which contains the dynamic TDD support information, to the neighboring radio base stations via the X2 interface. As described above, the update report message is a message to report the update of the configuration of the radio base station to the neighboring radio base stations.

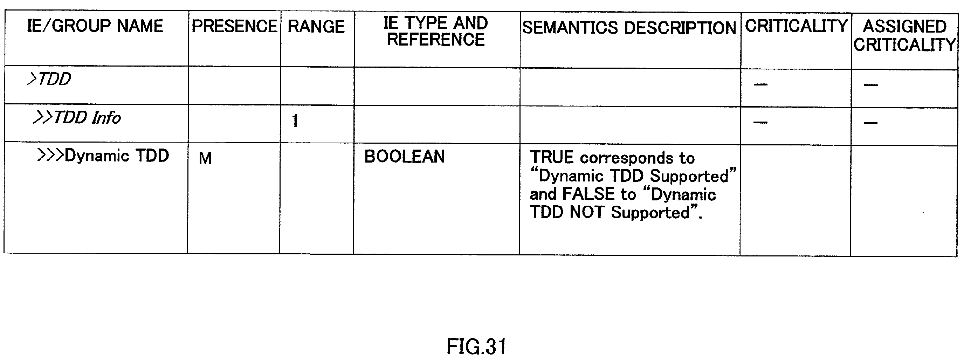

FIG. 31 is a diagram to show examples of the dynamic TDD support information according to aspect 4 (dynamic TDD). As shown in FIG. 31, the dynamic TDD support information may represent whether the radio base station supports dynamic TDD (dynamic TDD supported) or does not support dynamic TDD (dynamic TDD NOT supported), based on "TRUE" or "FALSE."

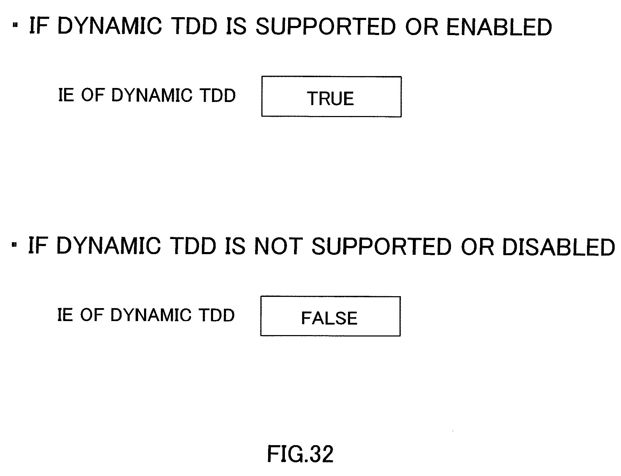

FIG. 32 is a diagram to explain the dynamic TDD support information according to aspect 4. As shown in FIG. 32, with the radio communication method according to aspect 4, every time whether or not the radio base station supports (can use) dynamic TDD is updated, dynamic TDD support information (dynamic TDD) is transmitted to the neighboring radio base stations.

As shown in FIG. 32, when the radio base station supports (or can use) dynamic TDD, "TRUE" is configured. On the other hand, when the radio base station does not support (or cannot use) dynamic TDD, "FALSE" is configured. Note that FIG. 32 is only an example.

With the radio communication method according to aspect 4, dynamic TDD support information (dynamic TDD, eIMTA capability indicator, etc.) is signaled to the neighboring radio base stations, so that the neighboring radio base stations can execute more adequate interference control based on whether or not the radio base station supports dynamic TDD.

(Structure of Radio Communication System) Now, the structure of the radio communication system according to the present embodiment will be described below. In this radio communication system, the radio communication methods according to aspects 1 to 4 are employed. Note that the radio communication methods according to aspects 1 to 4 may be employed in combinations or may be employed independently.

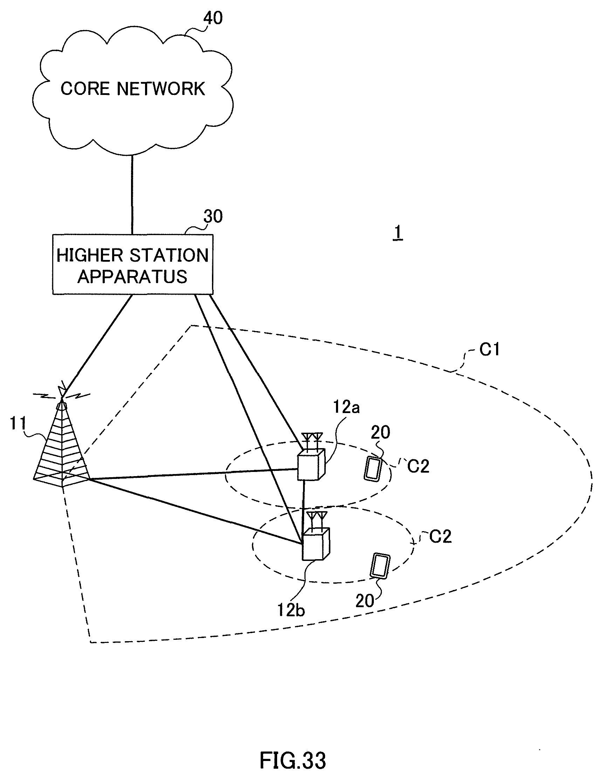

FIG. 33 is a diagram to show a schematic structure of the radio communication system according to the present embodiment. As shown in FIG. 33, a radio communication system 1 includes a macro base station 11, which forms a macro cell C1, and small base stations 12a and 12b, which are placed in the macro cell C1 and which form small cells C2 that are narrower than the macro cell C1. User terminals 20 are structured to be capable of carrying out radio communication with at least one of the macro base station 11 and the small base stations 12a and 12b (hereinafter collectively referred to as "small base stations 12"). Note that the number of the macro base station 11 and the small base stations 12 are not limited to that illustrated in FIG. 33.

The macro cell C1 and the small cells C2 may use the same frequency band or may use different frequency bands. Also, the macro base station 11 and each small base station 12 are inter-connected via an inter-radio-base-station interface (for example, the X2 interface). The macro base station 11 and the small base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these.

Note that the macro base station 11 is a radio base station having a relatively wide coverage, and may be referred to as an "eNodeB (eNB)," a "radio base station," a "transmission point" and so on. The small base stations 12 are radio base stations that have local coverages, and may be referred to as "RRHs (Remote Radio Heads)," "pico base stations," "femto base stations," "Home eNodeBs," "transmission points," "eNodeBs (eNBs)" and so on. The user terminals 20 are terminals to support various communication schemes such as LTE and LTE-A, and may not only cover mobile communication terminals, but may also cover fixed communication terminals as well.

In the radio communication system 1, time division duplex (TDD), which divides between the uplink and the downlink based on time, is employed as the duplex scheme. Note that it is equally possible to use full-duplex dynamic TDD, in which downlink transmission and uplink transmission are carried out in different time regions and in the same frequency region, and half-duplex dynamic TDD, in which downlink transmission and uplink transmission are carried out in different time regions and in different frequency regions. Also, in the radio communication system 1, UL/DL configurations (or UL-DL configuration), which represent the configurations (ratios) of uplink subframes and downlink subframes in a radio frame, are used.

Also, in the radio communication system 1, as radio access schemes, OFDMA (Orthogonal Frequency Division Multiple Access) is applied to the downlink, and SC-FDMA (Single-Carrier Frequency Division Multiple Access) is applied to the uplink.

Also, in the radio communication system 1, as downlink communication channels, a downlink shared channel (PDSCH: Physical Downlink Shared Channel), which is used by each user terminal 20 on a shared basis, and downlink control channels (PDCCH: Physical Downlink Control Channel and an EPDCCH: Enhanced Physical Downlink Control Channel), PCFICH, PHICH, broadcast channel (PBCH) and so on are used. User data and higher layer control information are transmitted by the PDSCH. Downlink control information (DCI) is transmitted by the PDCCH and the EPDCCH.

Also, in the radio communication system 1, as uplink communication channels, an uplink shared channel (PUSCH: Physical Uplink Shared Channel) that is used by each user terminal 20 on a shared basis, an uplink control channel (PUCCH: Physical Uplink Control Channel) and so on are used. User data and higher layer control information are transmitted by the PUSCH. Also, by means of the PUCCH, downlink radio quality information (CQI: Channel Quality Indicator), delivery acknowledgement information (ACK/NACK) and so on are transmitted.

The macro base station 11 and the small base stations 12 will be hereinafter collectively referred to as "radio base station 10," unless distinction is drawn otherwise. Note that the radio communication methods according to examples 1 to 4 may be employed between a plurality of macro base stations 11, may be employed between a plurality of small base stations 12, or may be employed between the macro base station 11 and the small base stations 12.

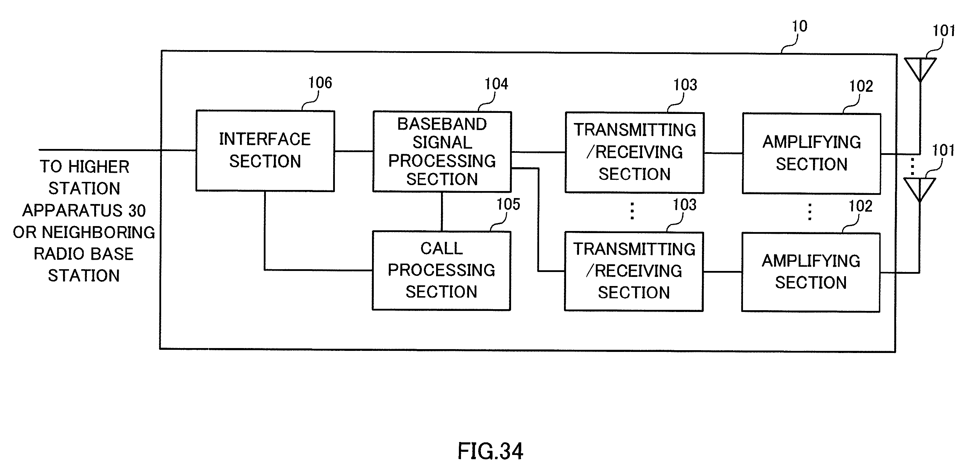

FIG. 34 is a diagram to show an overall structure of a radio base station 10 according to the present embodiment. The radio base station 10 has a plurality of transmitting/receiving antennas 101 for MIMO transmission, amplifying sections 102, transmitting/receiving sections 103, a baseband signal processing section 104, a call processing section 105 and an interface section 106.

User data to be transmitted from the radio base station 10 to a user terminal 20 on the downlink is input from the higher station apparatus 30, into the baseband signal processing section 104, via the interface section 106.

In the baseband signal processing section 104, a PDCP layer process, division and coupling of the user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a pre-coding process are performed, and the result is transferred to each transmitting/receiving section 103. Furthermore, downlink control signals are also subjected to transmission processes such as channel coding and an inverse fast Fourier transform, and are transferred to each transmitting/receiving section 103.

Each transmitting/receiving section 103 converts the downlink signals, which are pre-coded and output from the baseband signal processing section 104 on a per antenna basis, into a radio frequency band. The amplifying sections 102 amplify the radio frequency signals having been subjected to frequency conversion, and transmit the results through the transmitting/receiving antennas 101.

On the other hand, as for the uplink signals, radio frequency signals that are received in the transmitting/receiving antennas 101 are each amplified in the amplifying sections 102, converted into baseband signals through frequency conversion in each transmitting/receiving section 103, and input into the baseband signal processing section 104.

In the baseband signal processing section 104, the user data that is included in the input uplink signals is subjected to an FFT process, an IDFT process, error correction decoding, a MAC retransmission control receiving process and RLC layer and PDCP layer receiving processes, and the result is transferred to the higher station apparatus 30 via the interface section 106. The call processing section 105 performs call processing such as setting up and releasing communication channels, manages the state of the radio base station 10 and manages the radio resources.

The interface section 106 transmits and receives signals to and from the neighboring radio base stations via an inter-radio-base-station interface (for example, the X2 interface). Alternatively, the interface section 106 transmits and receives signals to and from the higher station apparatus 30 via a predetermined interface.

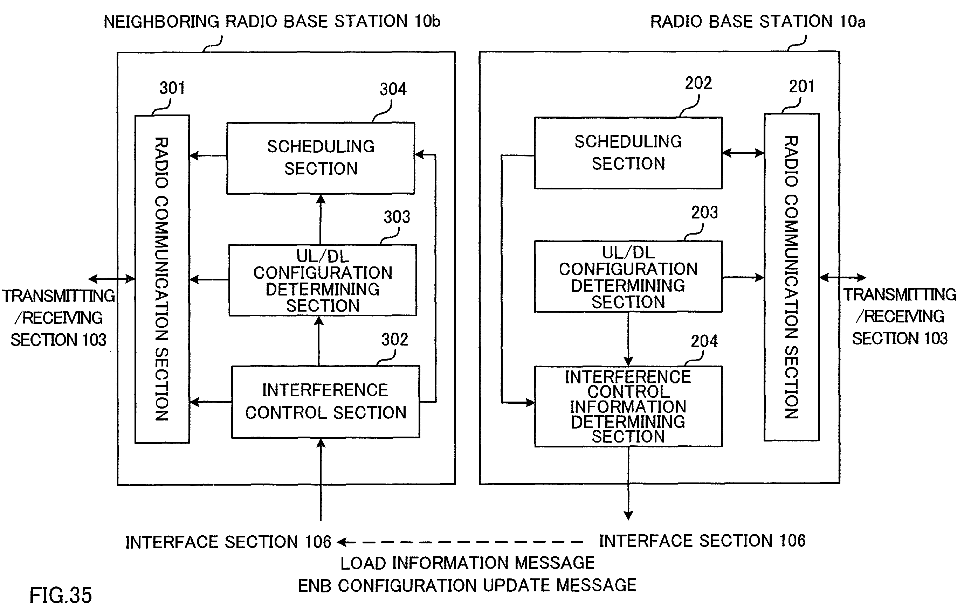

FIG. 35 is a diagram to show a functional structure of a radio base station 10 according to the present embodiment. Note that the following functional structure is formed with the baseband signal processing section 104 provided in the radio base station 10, and so on. Also, although the functional structures of a radio base station 10a and a neighboring radio base station 10b will be described separately with reference to FIG. 35 for ease of explanation, it is equally possible to allow one radio base station 10 to have both functional structures. Also, the radio base station 10a and the neighboring radio base station 10b may be two macro base stations 11, may be two small base stations 12 (for example, small base stations 12a and 12b), or may be a macro base station 11 and a small base station 12 (or a small base station 12 and a macro base station 11).

As shown in FIG. 35, the radio base station 10a has a radio communication section 201, a scheduling section 202, a UL/DL configuration determining section 203 and an interference control information determining section 204 (determining section).

The radio communication section 201 carries out radio communication with the user terminal 20 using UL/DL configurations determined in the UL/DL configuration determining section 203. To be more specific, the radio communication section 201 carries out the transmission process (for example, coding, modulation, etc.) of downlink signals for the user terminal 20 in accordance with the scheduling result in the scheduling section 202. Also, the radio communication section 201 carries out the receiving process of uplink signals (for example, demodulation, decoding, etc.) from the user terminal 20.

The scheduling section 202 allocates radio resources to the user terminal 20 (scheduling). To be more specific, the scheduling section 202 allocates radio resources to the user terminal 20 based on feedback information (for example, CQI: Channel Quality Indicator) from the user terminal 20. Note that the result of radio resource allocation (scheduling result) may be transmitted through a downlink control channel (the PDCCH or the EPDCCH) as DCI.

The UL/DL configuration determining section 203 determines the UL/DL configuration to use for radio communication with the user terminal 20. The UL/DL configuration determining section 203 may determine the UL/DL configuration dynamically (dynamic TDD) or semi-statically, based on traffic information and so on. The determined UL/DL configuration is reported to the user terminal 20 by, for example, downlink control channels (the PDCCH, the EPDCCH, etc.), the broadcast channel (PBCH), SIBs (System Information Blocks), RRC signaling and so on.

The interference control information determining section 204 determines the interference control information to use in interference control in the fixed subframes and the flexible subframes in the UL/DL configuration. To be more specific, the interference control information determining section 204 may determine the above-described IOI (interfered-level information) and inter-base-station interference information (eNB-to-eNB interference indicator) as the interference control information (aspect 1).

Here, the inter-base-station interference information may be fluctuation-level information (UL interference fluctuation) (aspect 1.1), may be subframe-type information (subframe type) (aspect 1.2) or may be interference-type information (interference type) (aspect 1.3). The determined IOI and inter-base-station interference information are included in a load information message (LOAD INFORMATION), and transmitted from the interface section 106 to the neighboring radio base station 10b.

Also, the interference control information determining section 204 may determine the HII (interfering level information) and subframe-type information (subframe type) (aspect 2) as interference control information. The determined HII and subframe-type information may be included in a load information message (LOAD INFORMATION) and transmitted from the interface section 106 to the neighboring radio base station 10b.

Also, the interference control information determining section 204 may determine UL/DL configuration information (dynamic TDD UL-DL-configuration indicator) as interference control information (aspect 3). Here, the UL/DL configuration information may be dynamic assignment information (dynamic subframe assignment) (aspect 3.1), or may be dynamic TDD configuration information (dynamic configuration) (aspect 3.2). The determined UL/DL configuration information is included in an update report message (ENB CONFIGURATION UPDATE), and transmitted from the interface section 106 to the neighboring radio base station 10b.

Also, the interference control information determining section 204 may determine the dynamic TDD support information (dynamic TDD, eIMTA capability indicator, etc.) as interference control information (aspect 4). The determined dynamic TDD support information is included in an update report message (ENB CONFIGURATION UPDATE), and transmitted from the interface section 106 to the neighboring radio base station 10b.

On the other hand, the neighboring radio base station 10b has a radio communication section 301, an interference control section 302, a UL/DL configuration determining section 303 and a scheduling section 304.

The radio communication section 301 carries out radio communication with the user terminal 20 using the UL/DL configuration determined in the UL/DL configuration determining section 303. To be more specific, the radio communication section 301 carries out the transmission process of downlink signals for the user terminal 20 (for example, coding, modulation, etc.) in accordance with the scheduling result in the scheduling section 304. Also, the radio communication section 301 carries out the receiving process (for example, demodulation, decoding, etc.) of uplink signals from the user terminal 20.

The interference control section 302 executes interference control for the fixed subframes and the flexible subframes in the UL/DL configuration based on the interference control information from the radio base station 10a. For example, the interference control section 302 detects whether or not inter-base-station interference is present based on the above-described IOI (interfered-level information) and inter-base-station interference information (eNB-to-eNB interference indicator) (aspect 1). In this case, the interference control section 302 lowers the transmission power of downlink signals for the user terminal 20 based on the detection result.

Also, the interference control section 302 detects the radio resources (for example, PRBs) in which the interference from the radio base station 10 is high, based on the above-noted HIIs interfering level information) and subframe-type information (subframe type) (aspect 2). In this case, the interference control section 302 may command the scheduling section 304 not to allocate the user terminal 20 to these radio resources.

Also, the interference control section 302 detects whether or not inter-cell interference is produced, based on the above-described UL/DL configuration information (dynamic TDD UL-DL-configuration indicator) (aspect 3). In this case, the interference control section 302 may command the UL/DL configuration determining section 303 to determine the same UL/DL configuration as in the radio base station 10a.

Also, the interference control section 302 detects whether or not inter-cell interference is produced, based on the above-described dynamic TDD support information (dynamic TDD) (aspect 3). In this case, the interference control section 302 may change whether or not to employ dynamic TDD in the subject base station.

The UL/DL configuration determining section 303 determines the UL/DL configuration to use in radio communication with the user terminal 20. The UL/DL configuration determining section 303 may determine the UL/DL configuration dynamically (dynamic TDD) or semi-statically, based on command information from the interference control section 302, traffic information and son on. The determined UL/DL configuration is reported to the user terminal 20 by, for example, downlink control channels (the PDCCH, the EPDCCH, etc.), a broadcast channel (PBCH), SIBs (System Information Blocks), RRC signaling, and so on.

The scheduling section 304 allocates radio resources to the user terminal 20 (scheduling). To be more specific, the scheduling section 304 allocates radio resources to the user terminal 20 based on command information from the interference control section 302, feedback information (for example, CQI) from the user terminal 20 and so on. Note that the result of radio resource allocation (scheduling result) may be transmitted through a downlink control channel (the PDCCH or the EPDCCH) as DCI.

As described above, in the radio communication system 1 according to the present embodiment, interference control information that is used in interference control for fixed subframes and flexible subframes is signaled from the radio base station 10a to the neighboring radio base station 10b via an inter-base-station interface. Consequently, it is possible to reduce the impact of inter-cell interference.

Now, although the present invention has been described in detail with reference to the above embodiments, it should be obvious to a person skilled in the art that the present invention is by no means limited to the embodiments described herein. The present invention can be implemented with various corrections and in various modifications, without departing from the spirit and scope of the present invention defined by the recitations of the claims. Consequently, the descriptions herein are provided only for the purpose of explaining examples, and should by no means be construed to limit the present invention in any way. Also, each embodiment may be combined as appropriate and implemented.

The disclosure of Japanese Patent Application No. 2013-116718, filed on June 3, 2013, including the specification, drawings and abstract, is incorporated herein by reference in its entirety.

## Claims

1. A radio base station that is connected to a neighboring radio base station via an inter-radio-base-station interface, comprising:
a radio communication section that carries out radio communication with a user terminal by using a UL/DL configuration, which represents a configuration of an uplink subframe and a downlink subframe in a radio frame;
a determining section that determines interference control information that is used in interference control for a fixed subframe and a flexible subframe in the UL/DL configuration; and
an interface section that transmits the interference control information to the neighboring radio base station via the inter-radio-base-station interface.

2. The radio base station according to claim 1, wherein the interference control information comprises interfered-level information to represent a level of interference which the radio base station receives, and inter-base-station interference information to represent whether or not inter-base-station interference is present in the flexible subframe.

3. The radio base station according to claim 2, wherein the inter-base-station interference information comprises fluctuation-level information to represent a level of fluctuation between interference which the radio base station receives in the fixed subframe and interference which the radio base station receives in the flexible subframe.

4. The radio base station according to claim 2, wherein the inter-base-station interference information is subframe-type information to represent whether the level of interference represented by the interfered-level information is a level of interference of the fixed subframe or the flexible subframe.

5. The radio base station according to claim 2, wherein the inter-base-station interference information is interference-type information to represent whether the level of interference represented by the interfered-level information is a level of interference of uplink interference or downlink interference.

6. The radio base station according to claim 1, wherein the interference control information comprises interfering level information to represent the level of interference which the radio base station gives, and subframe-type information to represent whether the level of interference represented by the interfering level information is the interference level of the fixed subframe or the flexible subframe.

7. The radio base station according to claim 1, wherein the interference control information is UL/DL configuration information to represent the UL/DL configuration that is used when dynamic TDD to change the UL/DL configuration dynamically is employed.

8. The radio base station according to claim 1, wherein the interference control information is dynamic TDD support information to represent whether or not dynamic TDD to change the UL/DL configuration dynamically is supported.

9. A radio communication system in which a radio base station is connected to a neighboring radio base station via an inter-radio-base-station interface, wherein:
the radio base station comprises:
a radio communication section that carries out radio communication with a user terminal by using a UL/DL configuration, which represents a configuration of an uplink subframe and a downlink subframe in a radio frame;
a determining section that determines interference control information that is used in interference control for a fixed subframe and a flexible subframe in the UL/DL configuration; and
an interface section that transmits the interference control information to the neighboring radio base station via the inter-radio-base-station interface; and
the neighboring radio base station comprises:
an interface section that receives the interference control information from the radio base station; and
an interference control section that carries out interference control for the fixed subframe and the flexible subframe based on the interference control information.

10. A radio communication method in a radio base station that is connected to a neighboring radio base station via an inter-radio-base-station interface, comprising the steps of:
carrying out radio communication with a user terminal by using a UL/DL configuration, which represents a configuration of an uplink subframe and a downlink subframe in a radio frame;
determining interference control information that is used in interference control for a fixed subframe and a flexible subframe in the UL/DL configuration; and
transmitting the interference control information to the neighboring radio base station via the inter-radio-base-station interface.
